# FASCICULE DE BREVET EUROPEEN

(11) **EP 4 134 758 B1**
(45) Date de publication et mention de la délivrance du brevet: **03.04.2024**
(21) Numéro de dépôt: 21190618.5
(22) Date de dépôt: 10.08.2021
(51) Int. Cl.: G04B 47/06

(54) **MÉCANISME DE PIÈCE D'HORLOGERIE INDIQUANT UNE INFORMATION RELATIVE À UNE PRESSION ENVIRONNANTE COMPORTANT UN MÉCANISME DE REMISE À ZERO ET PIÈCE D'HORLOGERIE, TELLE QU'UNE MONTRE DE PLONGÉE, COMPORTANT UN TEL MÉCANISME**
UHRENMECHANISMUS, DER INFORMATIONEN ÜBER EINEN UMGEBUNGSDRUCK ANZEIGT UND EINEN RÜCKSTELLMECHANISMUS UMFASST, UND UHR MIT EINEM SOLCHEN MECHANISMUS, WIE Z. B. EINE TAUCHERUHR
TIMEPIECE MECHANISM INDICATING INFORMATION ABOUT A SURROUNDING PRESSURE COMPRISING A RESET MECHANISM AND TIMEPIECE, SUCH AS A DIVING WATCH, COMPRISING SUCH A MECHANISM

(43) Date de publication de la demande: 15.02.2023
(73) Titulaire: Blancpain SA, 1348 Le Brassus (CH)
(72) Inventeur: BOSCAROLI, Guillaume, 1347 Le Solliat (CH); MONFERRER, Bernat, 1162 St-Prex (CH)
(74) Mandataire: ICB SA

(56) Documents cités:
- EP-A1- 1 850 194
- EP-A1- 3 168 694
- US-B1- 6 385 134

## Description

### Domaine technique de l'invention

Le domaine de l'invention concerne les mécanismes de pièce d'horlogerie permettant de mesurer et d'indiquer une information relative à une grandeur physique, par exemple la pression environnante, au moyen d'un organe indicateur et comportant un mécanisme de remise à zéro.

L'invention se rapporte plus particulièrement à mécanisme de pièce d'horlogerie, indiquant une information relative à la pression environnante, muni d'un dispositif de mesure de la pression environnante associé à un organe indicateur destiné à afficher cette pression, ou une grandeur équivalente à cette pression, et comportant un mécanisme de remise à zéro de l'organe indicateur.

L'invention concerne également un mouvement horloger comportant un tel mécanisme de pièce d'horlogerie indiquant une information relative à la pression environnante.

L'invention concerne également un profondimètre intégrant un tel mécanisme de pièce d'horlogerie.

L'invention concerne également un altimètre ou encore un baromètre intégrant un tel mécanisme de pièce d'horlogerie.

L'invention concerne également une pièce d'horlogerie, telle qu'une montre de plongée ou une montre altimètre, comportant un mouvement horloger comportant un tel mécanisme de pièce d'horlogerie.

### Arrière-plan technologique

Dans le domaine des profondimètres, ou des pièces d'horlogerie, permettant de mesurer la pression environnante, il est connu des mécanismes comportant un dispositif de mesure de la pression environnante associé à un organe indicateur destiné à afficher la pression environnante, ou une information équivalente à cette pression environnante. Ces pièces d'horlogerie sont utilisées le plus fréquemment comme montres de plongée.

De tels profondimètres, ou montres de plongée, permettent d'indiquer la profondeur instantanée du plongeur et quelques fois la profondeur maximale atteinte par le plongeur au moyen d'un deuxième organe indicateur. Ces données sont notamment importantes pour le plongeur car elles conditionnent la durée et la profondeur des paliers lors de la remontée. Par conséquent, il est important pour l'utilisateur que ces données soient précises.

Toutefois, les montres de plongées actuelles ne sont pas exclusivement destinées à être portées lors de plongées mais peuvent être portées en dehors de l'eau et notamment lors de différents voyages et à des altitudes différentes du niveau de la mer.

Or, les dispositifs de mesure de la pression environnante équipant de telles montres de plongée sont également sensibles aux variations de la pression atmosphérique, dues aux variations d'altitude ou encore aux changements des conditions météorologiques. Ces modifications de la pression atmosphérique environnante induisent également un déplacement de l'organe indicateur de pression mesurée autour de la valeur de zéro théorique.

Les montres de plongée, et les profondimètres, sont classiquement étanchéifiées au moyen de joints d'étanchéité en élastomère dimensionnés pour résister aux liquides, et notamment aux différentes pressions d'utilisation du dispositif de mesure de la pression environnante équipant les montres de plongée et les profondimètres. Bien que les joints d'étanchéité ont fait l'objet de développements pour améliorer la perméabilité aux gaz, tels que l'hélium ou l'hydrogène, ils restent perméables au gaz dans le temps, même de façon très réduite.

Ainsi, lors d'une exposition prolongée à une pression atmosphérique environnante différente de la pression régnant à l'intérieur de la montre de plongée, ou du profondimètre, par exemple lors d'un voyage de plusieurs jours en altitude, les particules d'hydrogène finissent par traverser les joints d'étanchéité, puis plus lentement les particules d'oxygène, de manière à rééquilibrer les pressions entre l'intérieur et l'extérieur de la montre de plongée ou du profondimètre. Ce rééquilibrage des pressions occasionne un lent retour de l'organe indicateur de pression dans sa position de référence, en regard de l'indicateur (indexe) du zéro théorique.

Ce phénomène de rééquilibrage des pressions entre l'intérieur et l'extérieur de la montre de plongée, ou du profondimètre, peut également être accéléré par les différentes manipulations de la tige ou des poussoirs.

Après un tel rééquilibrage des pressions, et lorsque l'utilisateur retourne, par exemple au niveau de la mer suite à un séjour prolongé en région montagneuse, en vue d'y effectuer une plongée, il existera alors une pression différentielle entre l'intérieur et l'extérieur de la pièce d'horlogerie ou du profondimètre, et donc un mauvais étalonnage du zéro théorique de l'organe indicateur de la pression, et par conséquent une mesure erronée de la profondeur instantanée lors de la plongée. L'utilisateur n'aura pas d'autres solutions que d'attendre plusieurs jours que le rééquilibrage des pressions s'amorce.

Ce manque de précision est aujourd'hui difficilement acceptable par les utilisateurs, notamment face à la précision apportée par des profondimètres numériques par exemple.

Pour remédier à ces inconvénients, les constructeurs utilisent généralement une astuce d'affichage au niveau de la graduation de la pression, de manière à masquer les défauts d'alignement de l'organe indicateur avec le zéro théorique de la graduation. Cette astuce d'affichage consiste à remplacer l'index du zéro théorique par une zone étendue de zéro formant un secteur angulaire ménagé sur le cadran de manière à englober les possibles variations de position de l'organe indicateur de pression lors de faibles variations de la pression environnante. Il existe encore des documents dans lesquels des solutions différentes ont été proposées. La demande EP3168694A1, par exemple, divulgue un deuxième mobile permettant l'affichage de la vitesse ascensionnelle d'un plongeur par un organe indicateur, et non directement celui la pression mesurée. Le mécanisme de remise à zéro existant est lié à la remise à zéro de ce deuxième mobile, et donc une remise à zéro de l'organe indicateur lié à la vitesse ascensionnelle, cette dernière n'étant affichée que toutes les cinq secondes grâce à un mécanisme d'embrayage entre le premier et le deuxième mobile.

Toutefois, cette astuce d'affichage ne permet pas d'indiquer de façon précise la pression environnante réelle lors d'une plongée, car il peut exister un décalage entre la pression indiquée et la pression environnante réelle. Ce qui est problématique compte tenu l'importance de cette information comme mentionné précédemment.

### Résumé de l'invention

Dans ce contexte, l'invention propose un mécanisme de pièce d'horlogerie, indiquant une information relative à la pression environnante, comportant un mécanisme de remise à zéro, pour la remise à zéro sur demande, d'un organe indicateur de la pression environnante permettant de répondre à au moins une problématique soulevée précédemment, et notamment de palier aux défauts d'affichage et d'étalonnage d'un organe indicateur de la pression environnante avant une plongée.

Le mécanisme de pièce d'horlogerie selon l'invention propose ainsi une solution technique innovante permettant de répondre aux exigences de précision de plus en plus importantes des utilisateurs. Le mécanisme de pièce d'horlogerie selon l'invention permet de réinitialiser à la demande l'organe indicateur de la pression environnante mesurée avant de réaliser une plongée, afin de s'affranchir des problématiques existantes de pressions relatives entre l'intérieur de la pièce d'horlogerie et l'extérieur, dues aux variations de la pression atmosphérique environnante.

Pour remédier à cette problématique, l'invention propose d'utiliser avantageusement une réindexation mécanique de l'organe indicateur de pression mesurée permettant de s'affranchir de toute problématique d'étanchéité aux liquides qui serait occasionnée par l'utilisation d'une tige ou d'un poussoir perméable permettant aux gaz d'entrer ou de sortir.

A cet effet, l'invention a pour objet un mécanisme de pièce d'horlogerie indiquant une information relative à la pression environnante, ledit mécanisme comportant :
- un dispositif de mesure de la pression environnante comportant un élément configuré pour se déformer mécaniquement sous l'effet d'une variation de la pression environnante ;
- un premier mobile relié cinématiquement au dispositif de mesure de la pression environnante, de manière à être entrainé en rotation sous l'effet d'une variation de pression environnante ;
- un mécanisme d'indication de la pression mesurée comportant un organe indicateur de pression mesurée lié cinématiquement à un rouage d'affichage de la pression mesurée ;
ledit mécanisme de pièce d'horlogerie étant caractérisé en ce qu'il comporte :
- un deuxième mobile configuré pour être en liaison débrayable avec le premier mobile, de sorte que le deuxième mobile est entraîné en rotation par la rotation du premier mobile sous l'effet d'une variation de pression, lorsque le deuxième mobile est embrayé avec le premier mobile ; ledit deuxième mobile étant lié cinématiquement au rouage d'affichage de la pression mesurée du mécanisme d'indication de la pression mesurée ;
- un mécanisme de remise à zéro pour positionner, sur demande, ledit organe indicateur de la pression mesurée dans une position de référence, ledit mécanisme de remise à zéro étant configuré pour débrayer le deuxième mobile du premier mobile et pour modifier la position relative du deuxième mobile par rapport au premier mobile, de manière à positionner ledit organe indicateur de la pression mesurée dans ladite position de référence.

Grâce au mécanisme selon l'invention, il est possible de remettre à zéro sur demande, le mécanisme d'indication de la pression mesurée avant chaque plongée de manière à optimiser la précision de mesure de la pression environnante lors des plongées, ce qui permet notamment d'éviter certaines incertitudes au niveau de la profondeur des paliers de plongée.

Outre les caractéristiques évoquées dans le paragraphe précédent, la pièce d'horlogerie selon l'invention peut présenter une ou plusieurs caractéristiques complémentaires parmi les suivantes, considérées individuellement ou selon toutes les combinaisons techniquement possibles :
- le deuxième mobile est monté en friction avec ledit premier mobile, de sorte qu'un couple de friction existe entre le premier mobile et le deuxième mobile ;
- le mécanisme de remise à zéro comporte :
   ∘ un mécanisme de blocage configuré pour venir bloquer la position angulaire du premier mobile, et
   ∘ un mécanisme d'entrainement configuré pour appliquer sur ledit deuxième mobile un couple d'entrainement et pour modifier la position relative entre le premier mobile et le deuxième mobile, de manière à positionner ledit organe indicateur de la pression mesurée dans ladite position de référence, lorsque le couple d'entrainement est supérieur au couple de friction existant entre le premier mobile et le deuxième mobile ;
- ledit mécanisme de remise à zéro comporte une commande de remise à zéro, actionnable par l'utilisateur, mobile en rotation autour d'un pivot, la commande de remise à zéro étant configurée pour actionner le mécanisme de blocage lors d'une première phase angulaire puis le mécanisme d'entrainement lors d'une deuxième phase angulaire ;
- ledit mécanisme de blocage comporte :
   ∘ une bascule de remise à zéro coopérant avec ladite commande de remise à zéro et mise en mouvement lors de la sollicitation de la commande de remise à zéro ;
   ∘ un bloqueur mis en mouvement par ladite bascule de remise à zéro, ledit bloqueur étant mobile entre une position de repos, dans laquelle la rotation du premier mobile n'est pas bloquée, et une position de blocage dans laquelle la rotation du premier mobile est bloquée ;
- le bloqueur comporte un bec de blocage adapté pour s'introduire entre deux dents consécutives d'une denture d'un rouage de blocage engrené avec le premier mobile et pour verrouiller la position angulaire dudit rouage de blocage ;
- le bec de blocage du bloqueur et la denture du rouage de blocage présentent un profil garantissant le verrouillage dudit rouage de blocage lorsqu'un effort tangentiel est appliqué sur le rouage de blocage ;
- la bascule de remise à zéro comporte un bec de bascule, le bec de bascule étant configuré pour basculer ledit bloqueur dans sa position de blocage lors de la première phase angulaire de la commande de remise à zéro et pour maintenir le bloqueur en position de blocage lors d'une deuxième phase angulaire de la remise à zéro ;
- le bloqueur comporte un organe de rappel configuré pour repositionner le bloqueur dans sa position de repos ;
- le mécanisme d'entrainement comporte :
   ∘ un coeur de remise à zéro présentant une position d'équilibre, ladite position d'équilibre correspondant à la position de référence de l'organe indicateur de la pression mesurée,
   ∘ un marteau de remise à zéro configuré pour repositionner ledit coeur de remise à zéro dans sa position d'équilibre ;
- le mécanisme d'entrainement comporte un mobile d'entrainement lié cinématiquement au mécanisme d'indication de la pression mesurée et en ce que le coeur de remise à zéro est solidaire du mobile d'entrainement, de sorte que le positionnement du coeur de remise à zéro dans sa position d'équilibre par l'action du marteau modifie la position relative du deuxième mobile par rapport au premier mobile, de manière à positionner ledit organe indicateur de la pression mesurée dans ladite position de référence ;
- le marteau est solidaire de la commande de remise à zéro ;
- le mécanisme de remise à zéro comporte un organe de retenue configuré pour exercer un effort de retenue sur ladite commande de remise à zéro et pour se déformer élastiquement lorsqu'un effort supérieur à l'effort de retenue est appliqué sur ledit organe de retenue ;
- l'organe de retenue comporte une portion élastique configurée pour se déformer élastiquement par flambage ;
- l'organe de retenue coopère directement avec ladite bascule de remise à zéro ;
- le mécanisme selon l'invention comporte un mécanisme d'indication de la pression maximale comportant un rouage d'affichage de la pression maximale comportant une roue d'affichage de la pression maximale, ledit mécanisme d'indication de la pression maximale comportant un organe indicateur de la pression maximale solidaire de la roue d'affichage de la pression maximale ; ledit mécanisme d'entrainement configuré pour entrainer graduellement le rouage d'affichage de la pression maximale lors d'une augmentation de la pression environnante ;
- le mécanisme d'entrainement comporte :
   ∘ un mobile d'entrainement, solidaire d'un axe, engrené avec le rouage d'affichage de la pression mesurée ;
   ∘ un mobile suiveur monté libre autour de l'axe du mobile d'entrainement, le mobile suiveur étant engrené avec le rouage d'affichage de la pression maximale ; le mobile d'entrainement étant configuré pour entrainer le mobile suiveur lors d'une augmentation de la pression environnante ;
- le mécanisme d'entrainement comporte une goupille d'entrainement solidaire du mobile d'entrainement et coopérant avec une lumière ménagée dans le mobile suiveur ;
- ledit mécanisme de pièce d'horlogerie comporte un mécanisme d'indexage pour indexer la position du rouage d'affichage de la pression maximale à chaque avance, le mécanisme d'indexage comportant un organe de blocage coopérant avec un mobile d'indexage ;
- le mobile d'indexage est lié cinématiquement à la roue d'affichage de la pression maximale par un train d'engrenage T1, T2 et en ce que le rapport d'engrenage du train d'engrenage T1, T2 entre la roue d'affichage de la pression maximale et le mobile d'indexage est un rapport de multiplication ;
- le mobile d'indexage comporte une roue dentée d'indexage comportant une denture asymétrique, de préférence une denture en dents de loup, ledit organe de blocage coopérant avec la denture asymétrique de la roue dentée d'indexage ;
- ledit organe de blocage est un organe de blocage débrayable configuré pour être débrayé par le mécanisme de remise à zéro ;
- l'organe de blocage est configuré pour être débrayé par la commande de remise à zéro ;
- le mécanisme d'indexage comporte un organe de rappel configuré pour assurer un repositionnement du rouage d'affichage de la pression maximale sous l'effet d'un élément de rappel lorsque l'organe de blocage est débrayé.

L'invention concerne également un profondimètre, un altimètre ou encore un baromètre intégrant un tel mécanisme de pièce d'horlogerie selon l'invention.

L'invention concerne également une pièce d'horlogerie comportant un mouvement horloger, mécanique ou électromécanique, comportant un tel mécanisme de pièce d'horlogerie selon l'invention.

Préférentiellement, la pièce d'horlogerie est une montre de plongée.

### Brève description des figures

Les buts, avantages et caractéristiques de la présente invention apparaîtront à la lecture de la description détaillée ci-dessous faisant référence aux figures suivantes :
- la figure 1 est une représentation schématique en perspective d'un premier exemple de réalisation du mécanisme de pièce d'horlogerie selon l'invention indiquant une information relative à la pression environnante ;
- la figure 2 est une représentation schématique en vue de dessus de l'exemple de réalisation du mécanisme de pièce d'horlogerie selon l'invention illustré à la figure 1 ;
- la figure 3 est une représentation schématique en vue de dessous de l'exemple de réalisation du mécanisme de pièce d'horlogerie selon l'invention illustré à la figure 1 ;
- les figures 4a et 4b illustrent différentes positions d'une partie du mécanisme de blocage du premier exemple de réalisation du mécanisme de pièce d'horlogerie selon l'invention ;
- la figure 5 est une vue en perspective d'un deuxième exemple de réalisation du mécanisme de pièce d'horlogerie selon l'invention indiquant une information relative à la pression environnante et comportant en outre un mécanisme d'indication de la pression maximale ;
- la figure 6 est une représentation schématique en vue de dessus du deuxième exemple de réalisation du mécanisme de pièce d'horlogerie selon l'invention illustré à la figure 5 ;
- la figure 7 une représentation schématique en vue de dessous du deuxième exemple de réalisation du mécanisme de pièce d'horlogerie selon l'invention illustré à la figure 5 ;
- la figure 8 est une représentation schématique en vue de dessus du mobile d'indexage de l'exemple de réalisation du mécanisme de pièce d'horlogerie selon l'invention, illustré à la figure 5.

Dans toutes les figures, les éléments communs portent les mêmes numéros de référence sauf précision contraire.

### Description détaillée de l'invention

De manière générale, dans le domaine de l'horlogerie, et dans la présente demande, le terme axe désigne une pièce ayant la forme d'un cylindre qui supporte généralement une roue dentée ou encore un pignon.

### Premier exemple de réalisation

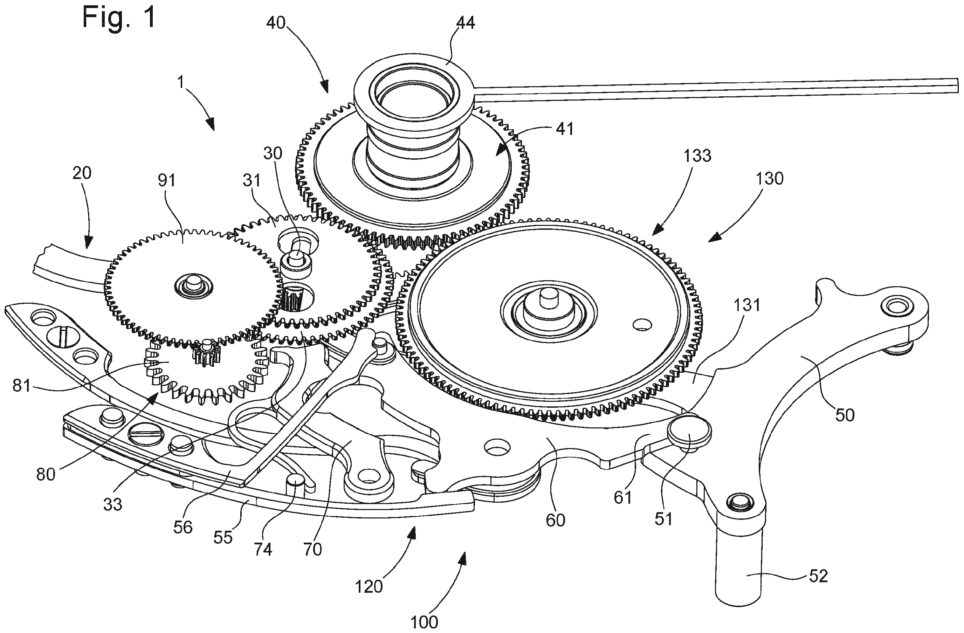

Le premier exemple de réalisation du mécanisme de pièce d'horlogerie 1 indiquant une information relative à la pression environnante selon l'invention est illustré aux figures 1 à 3.

La figure 1 est une représentation en perspective du mécanisme de pièce d'horlogerie 1 indiquant une information relative à la pression environnante selon l'invention.

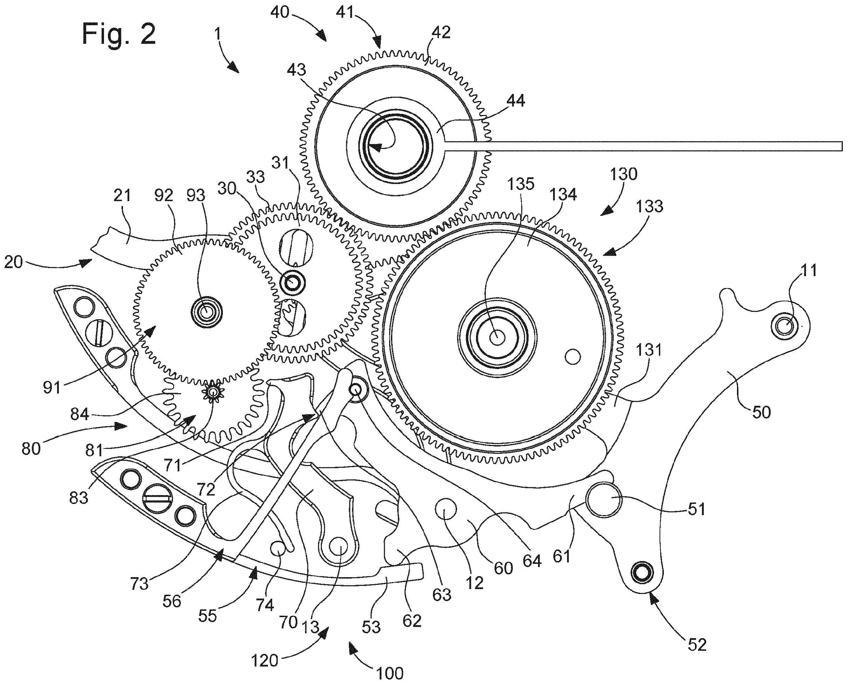

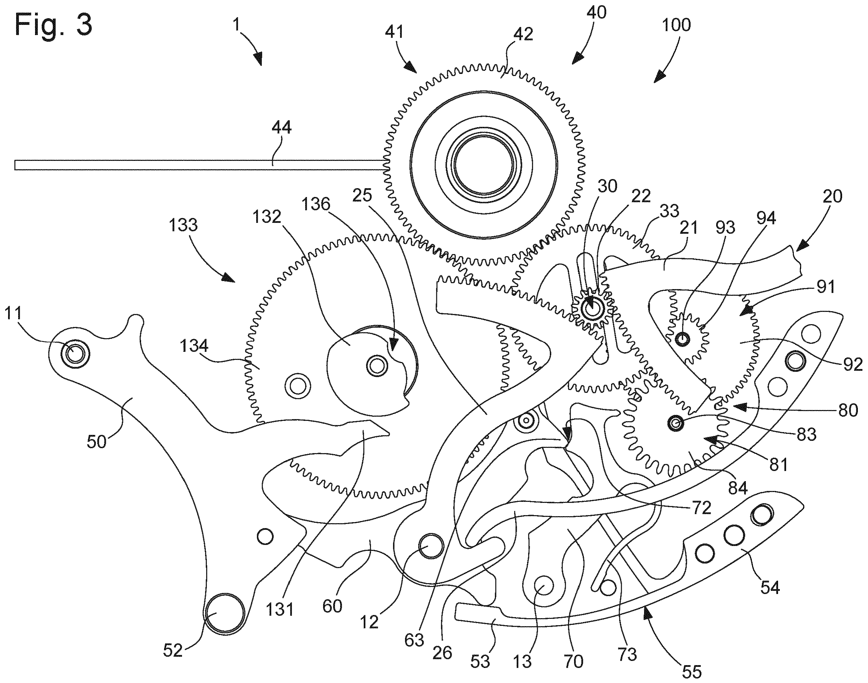

Les figures 2 et 3 sont respectivement des représentations en vue de dessus et en vue de dessous du premier exemple de réalisation du mécanisme de pièce d'horlogerie 1.

En référence aux figures 1 à 3, le mécanisme de pièce d'horlogerie 1 indiquant une information relative à la pression environnante selon l'invention comporte un premier mobile 31, solidaire d'un premier axe 30, monté pivotant sur un bâti (non représenté). Le premier mobile 31 est relié cinématiquement à un dispositif de mesure de la pression environnante 20.

Le dispositif de mesure de la pression environnante 20 comporte un élément (non représenté) configuré pour se déformer mécaniquement sous l'effet d'une variation de la pression environnante.

L'élément configuré pour se déformer mécaniquement sous l'effet d'une variation de la pression environnante est par exemple une membrane plane déformable mettant en mouvement un palpeur.

L'élément configuré pour se déformer mécaniquement sous l'effet d'une variation de la pression environnante peut également être une capsule anéroïde comportant une boîte anéroïde se comprimant ou se dilatant en fonction de la pression environnante.

Le dispositif de mesure de la pression environnante 20 est relativement classique et n'est pas représenté en détails sur les figures 1 à 3 pour une meilleure lisibilité et compréhension du mécanisme de pièce d'horlogerie 1 selon l'invention.

Le dispositif de mesure de la pression environnante 20 est agencé de sorte que les déplacements de l'élément configuré pour se déformer mécaniquement sous l'effet d'une variation de la pression environnante (membrane plane déformable, ou encore capsule anéroïde), sont transmis au premier mobile 31, sous la forme d'une rotation du premier axe 30, par l'intermédiaire d'un mécanisme de transmission, de sorte que la position angulaire du premier mobile 31, et donc du premier axe 30, varie en fonction de la pression environnante mesurée par le dispositif de mesure de la pression environnante 20.

A titre d'exemple, le mécanisme de transmission du dispositif de mesure de la pression environnante 20 peut comporter un râteau 21, visible plus particulièrement sur la figure 3, en bout de chaine cinématique, engrenant directement le premier mobile 31 ou un mobile intermédiaire engrené avec le premier mobile 31.

Plus particulièrement, le premier mobile 31 comporte un pignon 22, solidaire du premier axe 30, engrené avec le râteau 21 du mécanisme de transmission du dispositif de mesure de la pression environnante 20, comme représenté aux figures 1 à 3.

Ainsi, le premier mobile 31 décrit précédemment, solidaire du pignon 22, se déplace angulairement en fonction de la pression environnante mesurée par le dispositif de mesure de la pression environnante 20.

Le mécanisme de pièce d'horlogerie 1 indiquant une information relative à la pression environnante selon l'invention comporte également un second mobile 33 en liaison débrayable avec le premier mobile 31.

Le second mobile 33 est superposé au premier mobile 31, de sorte que le second mobile 33 est décalé du premier mobile 31 le long de l'axe géométrique de révolution du premier axe 30. Dans l'exemple de réalisation illustré, le second mobile 33 est positionné en dessous du premier mobile 31.

A titre d'exemple, le second mobile 33 est lié au premier mobile 31, et plus particulièrement au premier axe 30 sur lequel il est monté, par friction, de sorte qu'il existe un couple de friction, non nul, entre le premier mobile 31 et le second mobile 33.

Ainsi, le second mobile 33 est agencé pour être entraîné en rotation au même titre que le premier mobile 31 sous l'effet d'une variation de pression environnante par le dispositif de mesure de la pression environnante 20, tant qu'un couple supérieur au couple de friction existant entre les deux mobiles 31, 33 n'est pas appliqué sur l'un des mobiles 31, 33. Dans cette configuration, le second mobile 33 est dit embrayé avec le premier mobile 31.

Ainsi, en fonctionnement normal, c'est-à-dire sans action extérieure, par un mécanisme de remise à zéro 100 qui sera décrit par la suite, le premier mobile 31 et le second mobile 33, monté à friction, se comportent de manière solidaire, de sorte qu'une rotation du premier mobile 31 entraine également la rotation du second mobile 33, avec le même angle de rotation.

Le mécanisme de pièce d'horlogerie 1 comporte également un mécanisme d'indication de la pression mesurée 40 relié cinématiquement au second mobile 33.

Plus particulièrement, le mécanisme d'indication de la pression mesurée 40 comporte un rouage d'affichage de la pression mesurée 41 relié cinématiquement au second mobile 33. Le rouage d'affichage de la pression mesurée 41 comporte par exemple une roue d'affichage de la pression mesurée 42, solidaire d'un second axe 43 monté pivotant sur le bâti, et sur lequel est monté un organe indicateur de la pression mesurée 44, par exemple une aiguille, visible par l'utilisateur.

Dans l'exemple de réalisation illustré aux figures 1 à 3, la roue d'affichage de la pression mesurée 42 est engrenée directement avec le second mobile 33.

Toutefois, en fonction des besoins et des architectures de mouvement, le rouage d'affichage de la pression mesurée 41 peut également comporter des mobiles intermédiaires supplémentaires positionnés entre le second mobile 33 et la roue d'affichage de la pression mesurée 42 portant l'organe indicateur 44 de la pression mesurée.

Le mécanisme d'indication de la pression mesurée 40 est configuré pour permettre une rotation de l'organe indicateur de la pression mesurée 44 en adéquation avec une graduation (non représentée) ménagée sur un cadran. Cette rotation de l'organe indicateur de la pression mesurée 44 peut être linéaire en fonction de la variation de pression ou encore non linéaire. La graduation sur le cadran est en conséquence adaptée en fonction de la rotation linéaire ou non linéaire de l'organe indicateur de la pression mesurée 44.

Le mécanisme de pièce d'horlogerie 1 comporte également un mécanisme de remise à zéro 100 pour étalonner et corriger, sur demande de l'utilisateur, la position de l'organe indicateur de la pression mesurée 44 et ramener, si besoin, l'organe indicateur de la pression mesurée 44 dans une position de référence, indiquant par exemple le zéro théorique.

Comme nous le verrons par la suite, le mécanisme de remise à zéro 100 est configuré pour modifier, sur demande, la position relative (ou l'indexage) entre le premier mobile 31, lié cinématiquement au dispositif de mesure de la pression environnante 20, et le deuxième mobile 33, lié cinématiquement au mécanisme d'indication de la pression mesurée 40.

A cet effet, le mécanisme de remise à zéro 100 comporte une commande de remise à zéro 50 manipulable par l'utilisateur via un poussoir, ou un plot d'actionnement 52, (visible sur la figure 1), de sorte que la remise à zéro de la position angulaire de l'organe indicateur de la pression mesurée 44 est réalisée à la demande de l'utilisateur.

La commande de remise à zéro 50 est montée pivotante autour d'un premier pivot 11 solidaire du bâti.

Le mécanisme de remise à zéro 100 comporte également :
- un mécanisme de blocage 120 actionné par la commande de remise à zéro 50 et configuré pour venir bloquer sur demande la position angulaire du premier mobile 31 lors de l'actionnement de la commande de remise à zéro 50 ;
- un mécanisme d'entrainement 130 actionné par la commande de remise à zéro 50 et configuré pour modifier sur demande la position relative du second mobile 33 et repositionner l'organe indicateur de la pression mesurée 44 dans une position de référence, de manière à réaliser la fonction de remise à zéro.

Le mécanisme de blocage 120 comporte une bascule de remise à zéro 60 montée pivotante autour d'un second pivot 12 solidaire du bâti. La bascule de remise à zéro 60 est configurée pour coopérer avec la commande de remise à zéro 50, par exemple par l'intermédiaire d'un premier doigt de bascule 61 en appui sur une partie de la commande de remise à zéro 50, ou en appui sur une goupille 51 solidaire du corps de la commande de remise à zéro 50, comme représenté aux figures 1 à 3.

La bascule de remise à zéro 60 est maintenue en appui sur la commande de remise à zéro 50 par l'intermédiaire d'un premier organe de rappel 55 agissant sur une portion de la bascule de remise à zéro 60, par exemple au niveau d'un deuxième doigt de bascule 62.

On notera que le premier doigt de bascule 61 en contact avec la commande de remise à zéro 50 est radialement plus éloigné du second pivot 12 que le deuxième doigt de bascule 62 en contact avec le premier organe de rappel 55.

Selon l'exemple de réalisation illustré aux figures 1 à 3, le premier organe de rappel 55 est formé par une lame ressort comportant une portion 54 solidaire du bâti et une portion élastique 53 configurée pour rappeler la bascule de remise à zéro 60 dans une position de repos. Par l'intermédiaire du premier doigt de bascule 61, la bascule de remise à zéro 60 ramène également la commande de remise à zéro 50 dans une position de repos lorsque l'utilisation n'applique pas de pression sur cette commande de remise à zéro 50.

Le mécanisme de blocage 120 comporte également un bloqueur 70 monté pivotant autour d'un troisième pivot 13 solidaire du bâti, ainsi qu'un rouage de blocage 80 comportant par exemple un mobile de blocage 81 et un mobile intermédiaire de blocage 91.

Le bloqueur 70 est actionné directement par la bascule de remise à zéro 60, et est configuré pour permettre un blocage de la rotation du premier mobile 31 lors de l'actionnement de la commande de remise à zéro 50. Le bloqueur 70 et la bascule de remise à zéro 60 sont configurés de manière à ce que le blocage en rotation du premier mobile 31 intervienne avant l'actionnement du mécanisme d'entrainement 130 permettant de modifier la position angulaire du second mobile 33 par rapport au premier mobile 31.

Ainsi, le mécanisme de remise à zéro 100 selon l'invention est configuré pour permettre un blocage en rotation du premier mobile 31 puis un éventuel entrainement, via le mécanisme d'entrainement 130, du second mobile 33, de manière successive.

A cet effet, la bascule de remise à zéro 60 comporte un bec de bascule 63 coopérant avec une portion du bloqueur 70, formant un talon 72.

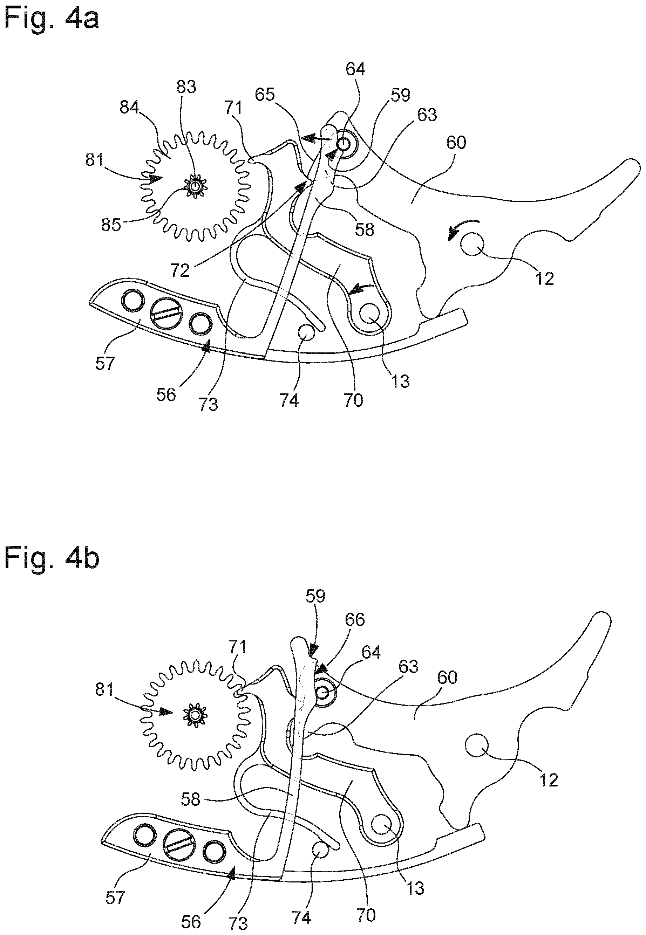

Les figures 4a et 4b illustrent différentes positions du bloqueur 70 et de la bascule de remise à zéro 60 lors de l'activation du mécanisme de blocage 120 permettant d'appréhender leur cinématique respective.

En position de repos, i.e. lorsque le mécanisme de blocage 120 n'est pas en position activée, le bec de bascule 63 est en contact avec la surface supérieure du talon 72, comme illustré plus particulièrement à la figure 4a.

La forme du talon 72 et du bec de bascule 63 permettent de basculer rapidement le mécanisme de blocage 120 dans une position activée de blocage, comme illustré particulièrement à la figure 4b, avec un faible pivotement de la bascule de remise à zéro 60.

Pour cela, dans la position de repos, le contact entre le bec de bascule 63 et la surface supérieure du talon 72 du bloqueur 70 est franc de sorte qu'il existe peu de glissement entre le bec de bascule 63 et la surface supérieure du talon 72 dans les premiers degrés de pivotement de la bascule de remise à zéro 60. Avantageusement, en position de repos, la surface supérieure du talon 72, en contact avec le bec de bascule 63, est orientée de manière sensiblement tangente à l'extrémité du bec de bascule 63.

Le bloqueur 70 comporte un bec de blocage 71 formant la partie terminale d'une première extrémité du bloqueur 70, le bec de blocage 71 étant adapté pour pénétrer entre deux dents de la denture du mobile de blocage 81 lors du basculement du bloqueur 70 dans sa position de blocage.

Le bec de blocage 71 présente une forme adaptée pour pénétrer facilement entre deux dents de la denture du mobile de blocage 81 sans coincement et pour garantir le verrouillage dudit mobile de blocage 81 lorsqu'un effort tangentiel ou un couple est appliqué sur le mobile de blocage 81.

Préférentiellement, un jeu de fonctionnement est ménagé entre le bec de blocage 71 et les dents de la denture du mobile de blocage 81, de manière à faciliter l'insertion et le retrait du bec de blocage 71 sans endommagement des éléments lors de l'actionnement de la commande de remise à zéro. A cet effet, la largeur du bec de blocage 71 est inférieure à l'écartement de deux dents consécutives de la denture du mobile de blocage 81.

Préférentiellement, la forme du bec de blocage 71 et la forme de la denture du mobile de blocage 81 sont configurées pour éviter de générer une force de renvoi ou de rappel sur le bloqueur 70, risquant ainsi de désengager le bec de blocage 71 de la denture du mobile de blocage 81, lorsqu'un couple est appliqué sur le mobile de blocage 81. A titre d'exemple, le mobile de blocage 81 présente une denture cycloïde, par exemple avec un profil NHS.

Le bec de blocage 71 ainsi que la forme du bloqueur 70 sont configurés de sorte qu'en position de blocage, le bec de blocage 71 ne touche pas le fond de dent de la denture du mobile de blocage 81, assurant ainsi un certain jeu de fonctionnement et éviter également un casse ou une usure du mécanisme.

A partir de la position décrite précédemment et illustrée à la figure 4a, la rotation de la bascule de remise à zéro 60 engendre un pivotement du bloqueur 70 autour du troisième pivot 13, faisant glisser petit à petit l'extrémité du bec de bascule 63 vers l'extrémité arrondie du talon 72, et amenant progressivement le bec de blocage 71 entre deux dents de la denture du mobile de blocage 81.

Lorsque le bec de blocage 71 est positionné entre deux dents de la denture du mobile de blocage 81, l'extrémité arrondie du talon 72 est en contact glissant avec la surface supérieure 65 du bec de bascule 63. Dès lors, un pivotement supplémentaire de la bascule de remise à zéro 60 n'engendre pas de rotation supplémentaire de bloqueur 70 (ou alors de faibles variations dues aux états de surface et/ou au profil des pièces en contact). De plus, le glissement du bec de bascule 63 sur l'extrémité arrondie du talon 72 permet de maintenir le bec de blocage 71 en position de blocage entre deux dents de la denture du mobile de blocage 81.

On notera également que le bloqueur 70 coopère avec un deuxième organe de rappel 73 pour repositionner le bloqueur 70 dans une position de repos et pour désengager le bec de blocage 71 de la denture du mobile de blocage 81 lors du relâchement de la commande de remise à zéro 50.

A titre d'exemple, le deuxième organe de rappel 73 est solidaire du corps du bloqueur 70 et mis en contrainte contre le bâti, ou contre un élément solidaire du bâti, comme par exemple une goupille 74, lors du basculement du bloqueur 70. Lors du relâchement de la commande de remise à zéro 50, le deuxième organe de rappel 73 sous contrainte repositionne le bloqueur 70 dans sa position initiale non engagée, i.e. la position de repos. Dans cette position de repos, illustrée par la figure 4a, le bec de blocage 71 n'est pas engagé dans la denture du mobile de blocage 81.

Le mobile de blocage 81 est solidaire d'un troisième axe 83 monté pivotant sur le bâti. Le mobile de blocage 81 comporte une roue de blocage 84 et un pignon de blocage 85 solidaire de la roue de blocage 84.

La roue de blocage 84 présente une denture comportant une pluralité de dents. La forme du bec de blocage 71 du bloqueur 70 est adaptée pour coopérer avec la forme des dents de la denture de la roue de blocage 84, de sorte que le bec de blocage 71 est configuré pour pouvoir pénétrer entre deux dents de la denture de la roue de blocage 84, de manière à immobiliser en rotation le mobile de blocage 81.

Le pignon 85 du mobile de blocage 81 engrène le mobile intermédiaire de blocage 91, et plus particulièrement une roue intermédiaire de blocage 92 du mobile intermédiaire de blocage 91.

Le mobile intermédiaire de blocage 91 est solidaire d'un quatrième axe 93 monté pivotant sur le bâti et comporte la roue intermédiaire de blocage 92, solidaire du quatrième axe 93, et un pignon 94, solidaire également du quatrième axe 93. Le pignon 94 du mobile intermédiaire de blocage 91 est engrené avec le premier mobile 31.

Ainsi, le blocage en rotation de la roue de blocage 84 immobilise provisoirement la rotation du premier mobile 31 ainsi que la position du râteau 21 du dispositif de mesure de la pression environnante 20.

Outre le mécanisme de blocage 120 qui vient d'être décrit précédemment permettant de venir bloquer la position angulaire du premier mobile 31, le mécanisme de remise à zéro 100 comporte également un mécanisme d'entraînement 130 permettant de repositionner l'organe indicateur de la pression mesurée 44 dans une position initiale de référence, de manière à réaliser la fonction de remise à zéro.

A cet effet, le mécanisme d'entraînement 130 comporte un marteau 131 de remise à zéro apte à coopérer avec un coeur de remise à zéro 132.

Dans l'exemple de réalisation illustré aux figures 1 à 3, le marteau 131 est solidaire de la commande de remise à zéro 50, de sorte que le pivotement de la commande de remise à zéro 50 déplace directement le marteau 131 en direction du coeur de remise à zéro 132, de manière à venir frapper celui-ci.

Selon une alternative de réalisation, le marteau 131 peut être une pièce dissociée de la commande de remise à zéro 50, et mise en mouvement par la commande de remise à zéro 50, par exemple par l'intermédiaire d'une bascule.

On notera que la portion de la commande de remise à zéro 50 destinée à enclencher le mécanisme de blocage 120, symbolisé ici par la goupille 51 est radialement plus éloigné de l'axe de pivotement du pivot 11 que la portion destinée à enclencher le mécanisme d'entrainement 130, ici symbolisé par le marteau 131. Un tel arrangement permet notamment d'obtenir, pour un même angle de rotation de la commande de remise à zéro 50, une action plus importante sur le mécanisme de blocage 120 que sur le mécanisme d'entrainement 130 de manière à s'assurer que le bloqueur 70 se trouve bien dans sa position de blocage avant que le marteau 131 ne vienne frapper le coeur de remise à zéro 132 et que le mécanisme d'entrainement 130 exerce une contrainte sur le rouage d'affichage de la pression mesurée 41.

Le coeur de remise à zéro 132 est solidaire d'un mobile d'entrainement 133, solidaire d'un cinquième axe 135 monté pivotant sur le bâti. Le mobile d'entrainement 133 comporte une roue d'entrainement 134 engrenée avec la roue d'affichage de la pression mesurée 42 solidaire du second axe 43 et portant l'organe indicateur 44 de la pression mesurée.

La forme du coeur de remise à zéro 132 permet au mobile d'entrainement 133 d'être angulairement repositionné sur la position d'équilibre stable 136 du coeur 132, cette position angulaire stable du mobile d'entrainement 133 correspond à la position de référence, par exemple au zéro théorique de la roue d'affichage de la pression mesurée 42 et donc de l'organe indicateur de la pression mesurée 44.

Ainsi, l'action du marteau 131 sur le coeur de remise à zéro 132 avec une force suffisante permet un repositionnement efficace du mobile d'entrainement 133 dans la position de référence décrite précédemment. Le mobile d'entrainement 133 étant engrené avec la roue d'affichage de la pression mesurée 42, le repositionnement du mobile d'entrainement 133 entraine le repositionnement dans une position de référence de la roue d'affichage de la pression mesurée 42, et donc de l'organe indicateur de la pression mesurée 44.

Le fonctionnement du mécanisme de remise à zéro 100 est le suivant.

Lors d'une première phase d'actionnement de la commande de remise à zéro 50, correspondant à une première phase angulaire de pivotement de la commande de remise à zéro 50, le pivotement de la commande de remise à zéro 50 déplace angulairement la bascule de remise à zéro 60 qui bascule le bloqueur 70 en position de blocage, via l'appui du bec de bascule 63 sur la surface supérieure du talon 72 du bloqueur 70. Le bec de blocage 71 du bloqueur 70 est ainsi positionné entre deux dents de la denture de la roue de blocage 84 du mobile de blocage 81.

Le mobile de blocage 81 est bloqué en rotation rapidement dès les premiers degrés de sollicitation de la commande de remise à zéro 50. Un tel blocage avant toute autre action permet avantageusement d'éviter un endommagement au niveau des différents rouages de la chaine cinématique reliée au dispositif de mesure de la pression 20.

A la fin de cette première phase angulaire, le bec de bascule 63 se trouve à proximité d'un point de basculement du talon 72, sur l'extrémité arrondie du talon 72, de sorte qu'un pivotement supplémentaire de la bascule de remise à zéro 60 n'engendrera pas de rotation supplémentaire significative du bloqueur 70, et donc du bec de blocage 71 déjà en position activée.

Lors d'une deuxième phase d'actionnement de la commande de remise à zéro 50, correspondant à une deuxième phase angulaire de la commande de remise à zéro 50, le pivotement supplémentaire de la commande de remise à zéro 50 continue d'entrainer en rotation la bascule de remise à zéro 60. Toutefois, le contact entre la bascule de remise à zéro 60 et le bloqueur 70 est désormais glissant, l'extrémité arrondie du talon 72 étant en contact glissant avec la surface supérieure 65 du bec de bascule 63. Ainsi, lors de cette deuxième phase angulaire, le bloqueur 70 est maintenu en position de blocage.

Cette deuxième phase angulaire permet également d'amener le marteau 131 en contact du coeur de remise à zéro 132. En fournissant une énergie suffisante sur la commande de remise à zéro 50, le coeur 132 est ramené dans une position d'équilibre stable sous l'effet du couple généré par le marteau 131, on parle généralement de couple de remise à zéro du coeur 132. Cette deuxième phase angulaire permet ainsi un repositionnement du mobile d'entrainement 133 dans la position de référence correspondant à la position d'équilibre stable du coeur de remise à zéro 132.

Le premier mobile 31, lié cinématiquement au dispositif de mesure de la pression 20, étant bloqué en rotation par le mécanisme de blocage 120, et notamment par le rouage de blocage 80 bloqué en rotation par le bloqueur 70, le repositionnement du mobile d'entrainement 133 a pour effet de repositionner la roue la roue d'affichage de la pression mesurée 42 dans une position de référence, et de modifier le positionnement relatif entre le premier mobile 31, bloqué en rotation, et le deuxième mobile 33 monté en friction par rapport au premier mobile 31, et lié cinématiquement au mobile d'entrainement 133, via la roue d'affichage de la pression mesurée 42.

Ce repositionnement relatif entre le premier mobile 31 et le deuxième mobile 32 est permis d'une part du fait que le premier mobile 31 est bloqué en rotation par le mécanisme de blocage 120 et d'autre part du fait que le couple appliqué au niveau du deuxième mobile 33 par le mécanisme d'entrainement 130 est supérieur au couple de friction existant entre ces deux mobiles 31, 33. Ainsi, dans cette deuxième phase angulaire, les deux mobiles 31, 33 se désolidarisent momentanément et prennent un nouvel indexage relatif.

L'organe indicateur de la pression mesurée 44 est alors étalonné, sur demande, quelle que soit la positon active du dispositif de mesure de la pression 20. Ainsi, le mécanisme de pièce d'horlogerie 1 selon l'invention permet de s'affranchir des problématiques de différences de pression, dues aux variations de la pression atmosphérique ayant des effets sur la précision de l'indication de la pression mesurée par le dispositif de mesure.

Le mécanisme de pièce d'horlogerie 1 selon l'invention permet également d'améliorer la précision d'affichage de la pression environnante, notamment lors de plongées dès les premiers mètres de profondeur.

Le mécanisme de remise à zéro 100 comporte en outre un organe de retenue 56 pour sécuriser le mécanisme de remise à zéro 100 et assurer une mise en action complète du mécanisme d'entraînement 130. L'organe de retenue 56 est configuré pour permettre la mise en action du mécanisme de blocage 120 tout en retenant momentanément la mise en action du mécanisme d'entraînement 130 dans une position non activée tant qu'un certain effort n'est pas appliqué sur la commande de remise à zéro 50.

L'organe de retenue 56 est un organe de protection du mécanisme d'entrainement 130 présentant un comportement dynamique semblable à un fusible mécanique.

Dans l'exemple de réalisation illustré aux figures 1 à 3, l'organe de retenue 56 comporte une portion 57 solidaire du bâti et une portion élastique 58 agencée pour exercer l'effort de retenue à l'encontre de l'actionnement de la commande de remise à zéro 50.

La portion élastique 58 est agencée pour exercer un effort de retenue sur la bascule de remise à zéro 60 et pour se déformer lorsqu'un effort supérieur à l'effort de retenue est appliqué sur la portion élastique 58.

La bascule de remise à zéro 60 comporte par exemple un plot 64 faisant saillie par rapport au corps de la bascule de remise à zéro 60. Le plot 64 est destiné à être en appui sur la portion élastique 58 de l'organe de retenue 56. La portion élastique 58 est orientée sensiblement tangentiellement à la trajectoire du plot 64 de sorte qu'elle génère un effort de retenue à l'encontre du pivotement de la bascule de remise à zéro 60 et donc de la commande de remise à zéro 50.

Plus particulièrement, le plot 64 est en appui au niveau d'une encoche de retenue 59 ménagée au niveau de l'extrémité libre de la portion élastique 58 de l'organe de retenue 56. L'encoche de retenue 59 présente une surface de retenue et un point de basculement au-delà duquel l'organe de retenue 56 autorise un basculement supplémentaire, rapide et franc, de la bascule de remise à zéro 60 et de la commande de remise à zéro 50, permettant ainsi d'actionner complètement le mécanisme d'entrainement 130, ainsi que la mise en contact du marteau 131 sur le coeur de remise à zéro 132.

L'encoche de retenue 59 est ménagée de sorte que lors de la première phase angulaire, le plot 64 puisse glisser au niveau de l'encoche de retenue 59 et autoriser un pivotement de la bascule de remise à zéro 60 et donc du bloqueur 70 jusqu'à sa position de blocage (position activée). Lorsque le bloqueur 70 est dans sa position activée, la surface de retenue de l'encoche de retenue 59 se trouve sensiblement perpendiculaire au bec de bascule 63 de la bascule de remise à zéro 60 de sorte que l'encoche de retenue 59 crée une force d'opposition significative au basculement supplémentaire de la bascule de remise à zéro 60. Pour se désengager de cette position et arriver au point de basculement de l'encoche de retenue 59, l'utilisateur doit exercer un effort supplémentaire sur la commande de remise à zéro 50 pour déformer élastiquement la portion élastique 58 de l'organe de retenue 56, par flambage, de manière à ce que la déformation par flambage de la portion élastique 58 combinée au pivotement de la bascule de remise à zéro 60, autorise le plot 64 à glisser sur la surface de retenue et à se désengager de l'encoche de retenue 59 pour venir glisser le long d'une portion latérale 66.

L'énergie fournie par l'utilisateur pour outrepasser l'effort de retenue permet ainsi de s'assurer de l'enclenchement du mécanisme d'entrainement 130 dans sa globalité par effet dynamique. La présence d'un organe de retenue 56 dans le mécanisme de remise à zéro 100 permet de s'affranchir des risques d'une remise à zéro incomplète par l'utilisateur.

L'organe de retenue 56 est configuré pour que le point de basculement soit atteint par le plot 64 lorsqu'un couple seuil prédéterminé est appliqué sur la commande de remise à zéro 50. Le couple seuil prédéterminé est fonction d'une certaine déformation élastique en flambage de la portion élastique 58 permettant au plot 64 de ne plus être retenu par la forme de l'encoche de retenue 59, et à un certain angle de pivotement de la bascule de remise à zéro 60.

Le mécanisme de pièce d'horlogerie 1 comporte également un râteau de rappel 25 coopérant avec un organe élastique de rappel 26, visibles plus particulièrement sur la figure 3, de manière à mettre en tension le rouage du mécanisme de remise à zéro 100, ainsi les jeux relatifs entre le mécanisme de remise à zéro 100 et le dispositif de mesure de la pression 20 sont supprimés.

Le râteau de rappel 25 est engrené avec le pignon 22 et l'organe élastique de rappel 26 agit sur le râteau de rappel 25, et donc sur le pignon 22, de manière à assurer un contact permanent entre les différentes pièces du dispositif de mesure de la pression 20, comme notamment un palpeur et une membrane déformable.

### Deuxième exemple de réalisation

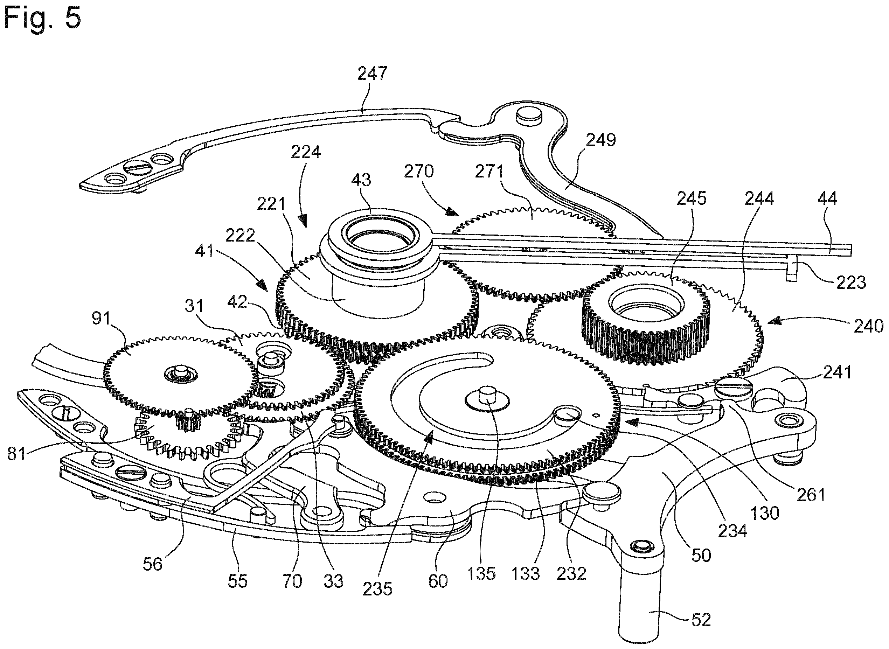

Les figures 5 à 7 représentent un deuxième exemple de réalisation d'un mécanisme de pièce d'horlogerie 1' indiquant une information relative à la pression environnante selon l'invention.

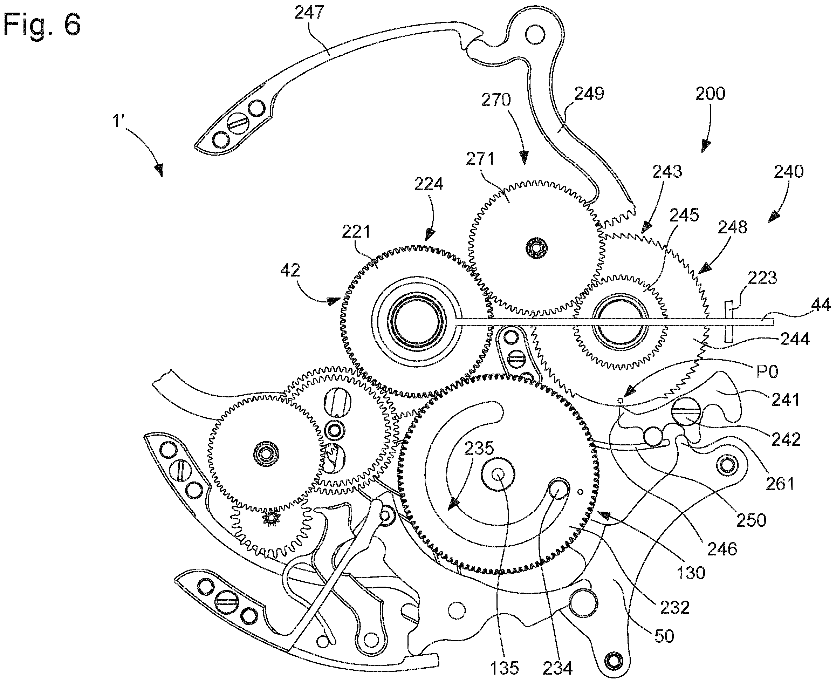

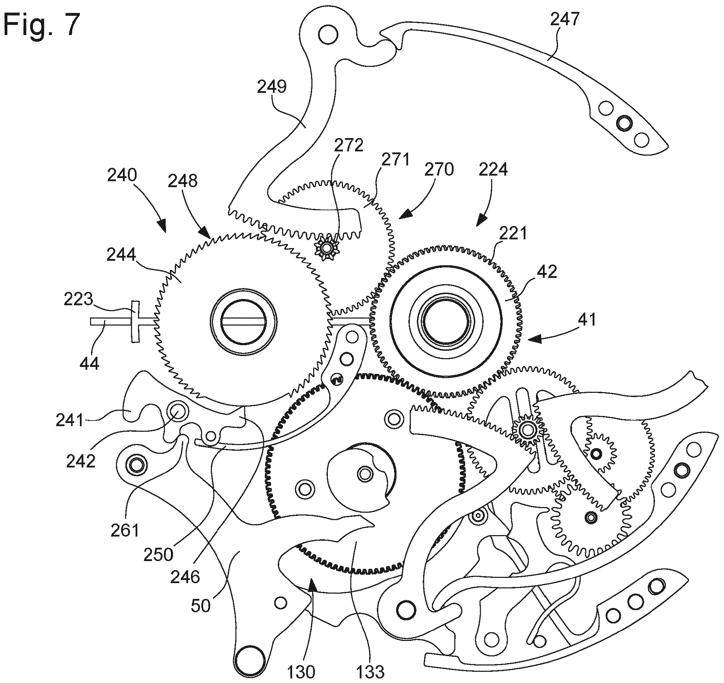

Plus particulièrement, la figure 5 est une vue en perspective d'un deuxième exemple de réalisation du mécanisme de pièce d'horlogerie 1' selon l'invention indiquant une information relative à la pression environnante et comportant en outre un mécanisme d'indication de la pression maximale. La figure 6 est une représentation en vue de dessus de ce deuxième exemple de réalisation du mécanisme de pièce d'horlogerie 1'. La figure 7 une représentation en vue de dessous de ce deuxième exemple de réalisation du mécanisme de pièce d'horlogerie selon l'invention illustré à la figure 5.

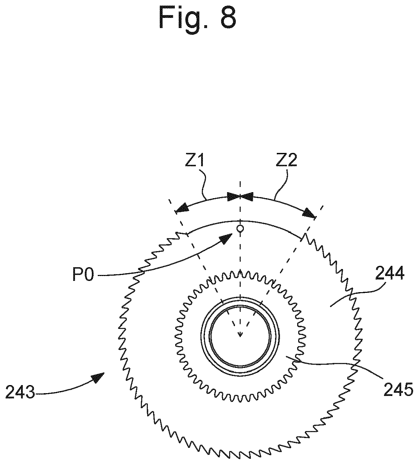

La figure 8 est une représentation en vue de dessus du mobile d'indexage du deuxième exemple de réalisation du mécanisme de pièce d'horlogerie 1'.

Dans ce deuxième exemple de réalisation, le mécanisme de pièce d'horlogerie 1' est identique au premier exemple de réalisation à l'exception des caractéristiques qui vont être décrites par la suite.

Dans ce deuxième exemple de réalisation, le mécanisme de pièce d'horlogerie 1' comporte l'ensemble des éléments décrits précédemment et également un mécanisme d'indication de la pression maximale 200 atteinte permettant par exemple d'indiquer la profondeur maximale atteinte lors d'une ou de plusieurs plongées, tant que le mécanisme d'indication de la pression maximale 200 n'est pas remis à zéro.

Un tel mécanisme d'indication de la pression maximale 200 comporte un rouage d'affichage de la pression maximale 224, comportant au moins une roue d'affichage de la pression maximale 221, solidaire d'un axe 222 monté pivotant sur le bâti. Le rouage d'affichage de la pression maximale 224 est lié cinématiquement au rouage d'indication de la pression mesurée 41.

Dans l'exemple de réalisation illustré aux figures 5 à 7, la roue d'affichage de la pression maximale 221 est montée coaxialement avec la roue d'affichage de la pression mesurée 42, de sorte que les deux roues 221, 42 sont superposées. Ainsi, l'axe 222 de la roue d'affichage de la pression maximale 221 est concentrique avec l'axe 43 de la roue d'affichage de la pression mesurée 42. Toutefois, il est également envisagé de pouvoir positionner la roue d'affichage de la pression maximale 221 et la roue d'affichage de la pression mesurée 42 de manière non coaxiale sans sortir du contexte de l'invention.

Dans l'exemple de réalisation illustré aux figures 5 à 7, la roue d'affichage de la pression maximale 221 et la roue d'affichage de la pression mesurée 42 sont centrées par rapport au centre du mécanisme. Toutefois, il est également envisagé de pouvoir positionner la roue d'affichage de la pression maximale 221 et la roue d'affichage de la pression mesurée 42 de manière excentrée par rapport au centre du mécanisme selon l'invention, et notamment par rapport au centre d'un mouvement horloger intégrant un mécanisme selon l'invention, de manière à pouvoir localiser l'affichage des informations relatives à la pression en dehors d'une zone centrale du mouvement horloger généralement consacré à l'indication d'informations horaires.

La roue d'affichage de la pression maximale 221 est solidaire d'un organe indicateur de la pression maximale 223, par exemple une aiguille montée solidaire sur l'axe 222.

La roue d'affichage de la pression maximale 221 est apte à être entrainée graduellement par le rouage d'affichage de la pression mesurée 41, ou par un mobile lié cinématiquement au rouage d'affichage de la pression mesurée 41.

A cet effet, le mécanisme d'entrainement 130 comporte en plus du mobile d'entrainement 133, décrit précédemment, un mobile suiveur 232 monté libre autour du cinquième axe 135 du mobile d'entrainement 133 et engrené avec la roue d'affichage de la pression maximale 221. Le mobile suiveur 232 est donc coaxial au mobile d'entrainement 133.

Dans ce deuxième exemple de réalisation, le mobile d'entrainement 133 est un mobile entraineur configuré pour entrainer graduellement le mobile suiveur 232 lors d'une augmentation de la pression environnante, mesurée par le dispositif de mesure de pression et en fonction de la position relative du mobile suiveur 232 par rapport au mobile d'entrainement 133.

Dans ce deuxième exemple de réalisation, le mécanisme d'entrainement 130 est également configuré pour permettre une avance de la position angulaire du mobile suiveur 232 lorsque la position angulaire du mobile d'entrainement 133 devient supérieure à la position angulaire du mobile suiveur 232.

L'entrainement du mobile suiveur 232 par le mobile d'entrainement 133 est réalisé au moyen d'une goupille d'entrainement 234 solidaire du mobile d'entrainement 133.

La goupille d'entrainement 234 est chassée dans le mobile d'entrainement 133, et plus particulièrement dans un orifice ménagé dans le corps du mobile d'entrainement 133 et fait saillie par rapport à la planche du mobile d'entrainement 133. La goupille d'entrainement 234 est configurée pour pouvoir se déplacer à l'intérieur d'une lumière 235 ménagée dans le corps du mobile suiveur 232 et pour pouvoir entrainer le mobile suiveur 232 lorsque la goupille d'entrainement 234 arrive en butée contre une extrémité de la lumière 235.

La lumière 235 présente une forme en arc de cercle dont l'étendue angulaire est configurée sensiblement en fonction de la course angulaire de la roue d'affichage de la pression mesurée 42.

Ainsi, le mobile d'entrainement 133 peut pivoter librement sans entraîner le mobile suiveur 232 lors d'une diminution de la pression environnante et lorsque la pression environnante reste inférieure à la pression maximale correspondant à la position effective du mobile suiveur 232.

Le mécanisme d'entrainement 130 fonctionne de la manière suivante. Lorsque les organes indicateurs de la pression mesurée 44 et de la pression maximale 223 sont dans une position de référence (zéro théorique) le mobile d'entrainement 133 et le mobile suiveur 232 sont également dans leur position initiale de référence. Dans ce cas, la goupille d'entrainement 234 est en butée contre une extrémité de la lumière 235 du mobile suiveur 232, comme illustré à la figure 5.

Lors d'une augmentation de la pression environnante mesurée par le dispositif de mesure de la pression environnante 20, le mobile d'entrainement 133 est entrainé en rotation et pivote selon un premier sens de rotation (par exemple dans le sens antihoraire). Les deux mobiles 133, 232 étant respectivement dans la même position de référence, la rotation du mobile d'entrainement 133 entraine également la rotation du mobile suiveur 232, la goupille d'entrainement 234 étant en butée contre une extrémité de la lumière 235. Le mobile suiveur 232 est ainsi entrainé dans une position angulaire correspondant à la pression mesurée.

Lors d'une diminution de la pression environnante, le mobile d'entrainement 133 pivote dans le sens inverse (par exemple dans le sens horaire selon l'architecture représentée aux figures 5 à 7). La goupille d'entrainement 234 se déplace alors librement à l'intérieur de la lumière 235. Le mobile d'entrainement 133 peut ainsi retourner librement dans une position angulaire antérieure ou dans sa position initiale de référence lorsque la pression est de nouveau nulle (par exemple en dehors de l'eau) sans entrainer le mobile suiveur 232 qui reste indexé dans une position angulaire correspondant à la pression maximale mesurée lors de l'augmentation de pression décrite précédemment.

Lorsque la pression environnante augmente de nouveau, le mobile suiveur 232 sera entrainé en rotation par le mobile d'entrainement 133 lorsque la pression mesurée deviendra supérieure à la pression maximale, correspondant à la position angulaire effective du mobile suiveur 232, c'est-à-dire lorsque la goupille d'entrainement 234 du mobile d'entrainement 133 reviendra en butée contre l'extrémité de la lumière 235.

Ainsi, la position angulaire du mobile suiveur 232 correspond à la valeur maximale de la pression mesurée par le dispositif de mesure de la pression environnante 20, tant que celui-ci n'est pas remis à zéro par la commande de remise à zéro 50 décrite précédemment.

La position angulaire du mobile suiveur 232, et donc de la roue d'affichage de la pression maximale 221, est maintenue à chaque avance au moyen d'un mécanisme d'indexage débrayable 240, de manière à indexer la position angulaire du mobile suiveur 232 correspondant à la valeur maximale mesurée de la pression environnante, depuis la dernière remise à zéro du mécanisme.

Le mécanisme d'indexage débrayable 240 est configuré pour bloquer la position angulaire de la roue d'affichage de la pression maximale 221 à chaque avance de celle-ci, lors des phases d'augmentation de la pression environnante, de sorte que la roue d'affichage de la pression maximale 21 reste indexée lors d'une diminution de la pression environnante.

Le mécanisme d'indexage débrayable 240 comporte un organe de blocage débrayable, par exemple un sautoir d'indexage 241, mobile en rotation autour d'un pivot 242 solidaire du bâti, entre une position embrayée et une position débrayée.

Le sautoir d'indexage 241 coopère avec un mobile d'indexage 243 comportant une roue dentée d'indexage 244 et un pignon central d'indexage 245, solidaire de la roue dentée d'indexage 244. Le pignon central d'indexage 245 est lié cinématiquement à la roue d'affichage de la pression maximale 221.

La roue dentée d'indexage 244 coopère avec le sautoir d'indexage 241, et plus particulièrement avec un bec de sautoir 246, de manière à bloquer la position de la roue d'affichage de la pression maximale 221, par l'intermédiaire du pignon central d'indexage 245, à chaque avance de la roue d'affichage de la pression maximale 221.

La roue dentée d'indexage 244 présente une denture asymétrique 248, par exemple une denture en dent de loup, de manière à permettre un indexage franc sans jeu et sans retour en arrière possible de la roue d'affichage de la pression maximale 221, grâce notamment aux flancs droits des dents de la denture asymétrique 248.

Toutefois, selon des variantes de réalisation il est possible d'utiliser un autre type de denture.

Le sautoir d'indexage 241 coopère avec une lame ressort 250 exerçant un effort sur le sautoir d'indexage 241 de manière à le positionner par défaut dans sa position embrayée et à assurer le positionnement du sautoir d'indexage 241, et plus particulièrement le bec de sautoir 246, en fond de dent de la denture de la roue dentée d'indexage 244.

La roue dentée d'indexage 244 présente une position d'indexage de référence correspondant par exemple au zéro théorique de la pression mesurée par le dispositif de mesure de la pression environnante 20. De manière à visualiser facilement cette position d'indexage de référence, la roue dentée d'indexage 244 présente avantageusement un marquage ou symbole d'indexage, référencé P0, ménagée sur la planche de la roue dentée d'indexage 244. Lorsque ce symbole d'indexage est positionné en regard du bec de sautoir 246, la roue dentée d'indexage 244 est dans sa position d'indexage de référence, comme illustré à la figure 6.

Comme représenté sur les figures 5 à 8, la roue dentée d'indexage 244 peut présenter un secteur denté inférieur à 360° de sorte qu'elle peut comporter une, ou plusieurs, zones, dites de non indexage, se caractérisant par une, ou plusieurs, portions angulaires lisses, i.e. dépourvues d'au moins une dent d'indexation, et préférentiellement de plusieurs dents d'indexation. Ces zones de non indexage permettent avantageusement de rendre la fonction d'indexage inactive sur certaines portions angulaires de la roue dentée d'indexage 244, de manière à ne pas indexer la position de l'organe indicateur de la pression maximale 223, sur certaines plages de valeur de pression environnante, correspondant à certaines situations prédéfinies par le constructeur.

Avantageusement, la roue dentée d'indexage 244 comporte au moins un secteur angulaire, dépourvu d'au moins une dent ou de plusieurs dents d'indexation, localisé à proximité du symbole d'indexage, référencé P0, de sorte que la roue dentée d'indexage 244 présente une portion dépourvue de dents d'indexation à proximité de sa position d'indexage de référence par rapport au bec de sautoir 246.

Avantageusement, la roue dentée d'indexage 244 comporte un premier secteur angulaire Z1 sans dents d'indexation positionné de manière à rendre l'indexage inactif lors des faibles variations de pression, au-delà du zéro théorique, par exemple pour des variations de la pression environnante mesurées lors d'une plongée de moins de quelques mètres, par exemple de moins de 1m, ou encore pour éviter d'indexer l'organe indicateur de la pression maximale 223 lors de légères modifications de la pression atmosphérique.

Par exemple, et selon l'exemple de réalisation illustré aux figures 5 à 8, le premier secteur angulaire Z1, dépourvu d'au moins une dent d'indexation, est typiquement positionné entre le symbole d'indexage P0 et le flanc incliné d'une première dent de la denture asymétrique 248, comme symbolisé sur la figure 8.

Avantageusement, la roue dentée d'indexage 244 peut également comporter un deuxième secteur angulaire Z2 sans dents d'indexation positionné de manière à rendre l'indexage inactif lorsque la pression environnante dépasse la valeur maximale de l'affichage dédié à la pression maximale, par exemple un affichage figurant sur un cadran. Ainsi, la position de l'organe indicateur de la profondeur maximale 223 ne pourra pas être indexée dans une position située au-delà de la valeur maximale prévue par l'affichage.

Ainsi, dans notre exemple précédent, le deuxième secteur angulaire Z2 dépourvu d'au moins une dent d'indexation est positionné après le flanc droit d'une dernière dent correspondant à la dernière position d'indexation désirée, ou entre le symbole d'indexage P0 et le flanc droit d'une dernière dent de la denture asymétrique 248, comme symbolisé sur la figure 8.

La remise à zéro du rouage d'affichage de la pression maximale 224 est assurée par la commande de remise à zéro 50 servant également pour la remise à zéro du mécanisme de la position angulaire de l'organe indicateur de la pression mesurée 44.

La commande de remise à zéro 50 comporte un doigt 261 supplémentaire apte à former une bascule de pivotement du sautoir d'indexage 241. L'actionnement par l'utilisateur de la commande de remise à zéro 50 doit vaincre l'effort de rappel de la lame ressort 250 pour permettre le pivotement du sautoir d'indexage 241 et son désengagement de la denture 248 de la roue dentée d'indexage 244.

Avantageusement, le doigt 261 agit sur le sautoir d'indexage 241 lors de la deuxième phase angulaire du pivotement de la commande de remise à zéro 50. De sorte que l'actionnement complet de la commande de remise à zéro 50 permet à la fois la remise à zéro du rouage d'affichage de la pression maximale 224 et du rouage d'affichage de la pression mesurée 41.

Le mécanisme d'indexage débrayable 240 comporte également un troisième organe de rappel 249, par exemple un râteau de rappel, coopérant avec un élément de rappel 247 apte à exercer un effort de rappel sur le troisième organe de rappel 249. Le troisième organe de rappel 249 est lié cinématiquement au rouage d'affichage de la pression maximale 224, et plus particulièrement à la roue d'affichage de la pression maximale 221. Ainsi, le troisième organe de rappel 249 permet une mise en tension du rouage d'affichage de la pression maximale 224 et du mécanisme d'entrainement 130, ce qui permet d'éviter les flottements de l'organe indicateur de la pression maximale 223, dus aux jeux de fonctionnement existants entre les différents engrenages du rouage.

Via l'élément de rappel 247, le troisième organe de rappel 249 exerce également une force de rappel sur la roue d'affichage de la pression maximale 221 apte à repositionner la roue d'affichage de la pression maximale 221 et l'organe indicateur de la pression maximale 223 dans une position de référence, par exemple le zéro théorique, lorsque le sautoir d'indexage 241 est amené en position débrayée par la commande de remise à zéro 50.

L'élément de rappel 247 est par exemple un ressort de rappel.

Comme vu précédemment, le mobile d'indexage 243 est lié cinématiquement à la roue d'affichage de la pression maximale 221.

Selon une première variante de réalisation, non illustrée, le mobile d'indexage 243 est engrené directement avec la roue d'affichage de la pression maximale 221, par exemple par l'intermédiaire du pignon central d'indexage 245, de sorte qu'un premier train d'engrenage T1 est formé entre la roue d'affichage de la pression maximale 221 et le mobile d'indexage 243.

Selon une deuxième variante de réalisation, illustrée plus particulièrement aux figures 5 à 7, le mécanisme d'indexage débrayable 240 comporte en outre un mobile intermédiaire d'indexage 270 positionné entre le mobile d'indexage 243 et la roue d'affichage de la pression maximale 221, de sorte que le mobile d'indexage 243 est lié cinématiquement à la roue d'affichage de la pression maximale 221 par l'intermédiaire de ce mobile intermédiaire d'indexage 270. Dans cette variante de réalisation, la roue d'affichage de la pression maximale 221, le mobile intermédiaire d'indexage 270 et le mobile d'indexage 243 forment un deuxième train d'engrenage T2.

Quelle que soit la variante de réalisation, les différents engrenages constituant les trains d'engrenage T1 ou T2 sont configurés de sorte que le rapport d'engrenage, résultant entre la roue d'affichage de la pression maximale 221 et le mobile d'indexage 243, est un rapport de multiplication.

Ainsi, avec un rapport de multiplication entre la roue d'affichage de la pression maximale 221 et le mobile d'indexage 243, le mécanisme permet avantageusement de pouvoir augmenter les positions d'indexage possibles de l'organe indicateur de la pression maximale 223, ce qui permet d'augmenter la résolution d'affichage de la pression maximale.

L'utilisation d'un rapport de multiplication entre la roue d'affichage de la pression maximale 221 et le mobile d'indexage 243 permet notamment de s'approcher des résultats d'affichage et de précision d'un mécanisme d'entrainement par friction tout en proposant un mécanisme de conception plus simple avec une compacité optimisée et réduite.

L'utilisation d'un mobile intermédiaire d'indexage 270 permet avantageusement de réaliser un renvoi de manière à déporter le mobile d'indexage 243 en dehors d'une zone proche de l'axe 222 de la roue d'affichage de la pression maximale 221. Ainsi, on facilite l'implantation des différents éléments du mécanisme d'indication de la pression maximale 20, dans un mouvement et on minimise l'épaisseur du mécanisme. De manière avantageuse, le mobile intermédiaire d'indexage 270 permet de déporter le mobile d'indexage 243 de la région centrale du mécanisme qui comporte généralement une accumulation d'organes indicateurs sur un même axe. Ainsi, on facilite l'implantation et on minimise l'épaisseur totale du mécanisme selon l'invention, et notamment d'un mouvement horloger intégrant un tel mécanisme.

Plus particulièrement, le mobile intermédiaire d'indexage 270 comporte une roue intermédiaire d'indexage 271 engrenée d'une part avec la roue d'affichage de la pression maximale 221 et engrenée d'autre part avec le pignon central d'indexage 245 du mobile d'indexage 243.

Le mobile intermédiaire d'indexage 270 comporte également un pignon intermédiaire d'indexage 272 (visible sur la figure 7). Dans l'exemple de réalisation illustré aux figures 5 à 7, le troisième organe de rappel 249 est engrené avec un pignon intermédiaire d'indexage 272 de manière à appliquer l'effort de rappel sur le rouage d'affichage de la pression maximale 224. Une telle implantation permet avantageusement de diminuer la course angulaire du troisième organe de rappel 249, et ainsi faciliter l'implantation des différents éléments du mécanisme selon l'invention.

Toutefois, d'autres constructions sont possibles sans sortir du contexte de l'invention.

Selon une variante de réalisation, le troisième organe de rappel 249 peut coopérer par exemple avec le mobile d'indexage 243, et être engrené sur le pignon central d'indexage 245 du mobile d'indexage 243.

A titre d'exemple, le mobile d'indexage 243 comporte 62 dents usinées, ce qui correspondant à une mobile d'indexage comportant 73 dents sur une circonférence totale de 360°.

Ainsi, dans l'exemple de réalisation présenté, le mobile d'indexage 243 permet de réaliser 62 positions d'indexation de l'organe indicateur de la pression maximale 223. Ainsi, il est possible d'avoir une résolution plus fine dans l'affichage de la pression maximale atteinte.

Dans ce deuxième exemple de réalisation, le mécanisme de pièce d'horlogerie 1' permet d'indiquer une information relative à la pression environnante ainsi qu'une information relative à la pression maximale atteinte avec peu de pièces supplémentaires et avec un encombrement réduit.

Le mécanisme de pièce d'horlogerie 1' selon l'invention permet avantageusement de pouvoir réaliser une fonction de remise à zéro à la fois de l'organe indicateur de la pression mesurée 44 et de l'organe indicateur de la pression maximale 201, de manière simultanée, et avec une unique commande de remise à zéro 50, facilitant ainsi les manipulations avant une plongée.

Avantageusement, le mécanisme de pièce d'horlogerie 1' selon l'invention comporte :
- un dispositif de mesure de la pression environnante 20 comportant un élément configuré pour se déformer mécaniquement sous l'effet d'une variation de la pression environnante ;
- un rouage d'affichage de la pression mesurée 41 relié cinématiquement au dispositif de mesure de de la pression environnante 20, de manière à être entrainé en rotation sous l'effet d'une variation de la pression environnante ;
- un mécanisme d'indication de la pression maximale 200 comportant un rouage d'affichage de la pression maximale 224 comportant une roue d'affichage de la pression maximale 221, ledit mécanisme d'indication de la pression maximale 200 comportant un organe indicateur de la pression maximale 223 solidaire de la roue d'affichage de la pression maximale 221 ;
- un mécanisme d'entrainement 130 configuré pour entrainer graduellement le rouage d'affichage de la pression maximale 224 lors d'une augmentation de la pression environnante ;
- un mécanisme d'indexage 240 pour indexer la position du rouage d'affichage de la pression maximale 224 à chaque avance, le mécanisme d'indexage 240 comportant un organe de blocage coopérant avec un mobile d'indexage 243 ;
le mécanisme de pièce d'horlogerie 1' étant caractérisé en ce que le mobile d'indexage 243 est lié cinématiquement à la roue d'affichage de la pression maximale 221 par un train d'engrenage T1, T2 et en ce que le rapport d'engrenage du train d'engrenage T1, T2 entre la roue d'affichage de la pression maximale 221 et le mobile d'indexage 243 est un rapport de multiplication.

Avantageusement, le mobile d'indexage 243 comporte un pignon central d'indexage 245 engrené avec la roue d'affichage de la pression maximale 221, de sorte que ledit train d'engrenage T1 est formé par la coopération de la roue d'affichage de la pression maximale 221 et du pignon central d'indexage 245.

Avantageusement, le mécanisme d'indexage 240 comporte un mobile intermédiaire d'indexage 270 intercalé entre la roue d'affichage de la pression maximale 221 et le mobile d'indexage 243 de sorte que ledit train d'engrenage T2 est formé par la coopération entre la roue d'affichage de la pression maximale 221, le mobile intermédiaire d'indexage 270 et le mobile d'indexage 243 ; ainsi, le mobile intermédiaire d'indexage 270 fait office de renvoi et permet de déporter le mobile d'indexage 243 du mobile de l'organe d'indicateur de la pression maximale 223, ce qui permet d'implanter plus facilement le mécanisme selon l'invention.

Avantageusement, le mobile d'indexage 243 comporte un pignon central d'indexage 245 engrené avec le mobile intermédiaire d'indexage 270, de sorte que ledit train d'engrenage T2 est formé par la coopération entre la roue d'affichage de la pression maximale 221, le mobile intermédiaire d'indexage 270 et le pignon central d'indexage 245.

Avantageusement, le mobile d'indexage 243 comporte une roue dentée d'indexage 244 solidaire du pignon central d'indexage 245.

Avantageusement, la roue dentée d'indexage 244 comporte une denture asymétrique 248 comportant une pluralité de dents d'indexation, de préférence une denture en dents de loup, ledit organe de blocage coopérant avec la denture asymétrique 248 de la roue dentée d'indexage 244.

Avantageusement, la roue dentée d'indexage 244 comporte un secteur denté inférieur à 360°, de sorte que ladite roue dentée d'indexage 244 comporte au moins un secteur angulaire dépourvu d'au moins une dent d'indexation.

Avantageusement, ledit au moins un secteur angulaire dépourvu d'au moins une dent d'indexation est positionné à proximité d'une position d'indexage de référence du mobile d'indexage 243.

Avantageusement, l'organe de blocage est un organe de blocage débrayable, par exemple un sautoir d'indexage 41, via une commande de remise à zéro 50.

Avantageusement, le mécanisme d'indexage 240 comporte un organe de rappel 249, dit troisième organe de rappel, configuré pour assurer un repositionnement du rouage d'affichage de la pression maximale 224 sous l'effet d'un élément de rappel 247.

Avantageusement, le troisième organe de rappel 249 coopère avec le mobile d'indexage 243.

Avantageusement, le troisième organe de rappel 249 coopère avec le mobile intermédiaire d'indexage 270.

Avantageusement, le troisième organe de rappel 249 coopère avec un pignon intermédiaire d'indexage 272 du mobile intermédiaire d'indexage 270.

Avantageusement, le mécanisme d'entrainement 130 comporte un mobile d'entrainement 133, formant un premier mobile, solidaire d'un axe 135, engrené avec le rouage d'affichage de la pression mesurée 41, et un mobile suiveur 232, formant un second mobile, monté libre autour de l'axe 135 du mobile d'entrainement 133, le mobile suiveur 232 étant engrené avec le rouage d'affichage de la pression maximale 224, le mobile d'entrainement 133 étant configuré pour entrainer le mobile suiveur 232 lors d'une augmentation de la pression environnante.

Avantageusement, le mécanisme d'entrainement 130 comporte une goupille d'entrainement 234 solidaire du mobile d'entrainement 133 coopérant avec une lumière 235 ménagée dans le mobile suiveur 232.

Le mécanisme de pièce d'horlogerie 1, 1' selon l'invention peut être combiné à un mouvement horloger configuré pour indiquer des informations relatives à des informations horaires.

L'invention concerne également un profondimètre, un altimètre ou encore un baromètre intégrant un tel mécanisme de pièce d'horlogerie 1, 1' tel que décrit précédemment selon le premier exemple ou le deuxième exemple de réalisation.

L'invention concerne également une pièce d'horlogerie, telle qu'une montre de plongée, comportant un mouvement horloger comportant un tel mécanisme de pièce d'horlogerie 1, 1' permettant de mesurer et d'indiquer une information relative à la pression environnante, d'indiquer la pression maximale atteinte et de remettre à zéro au moyen d'une commande unique les organes indicateurs de la pression environnante et de la pression maximale atteinte afin d'étalonner correctement le mécanisme de pièce d'horlogerie 1, 1', par exemple avant une plongée.

## Revendications

1. Mécanisme de pièce d'horlogerie (1, 1') indiquant une information relative à la pression environnante, ledit mécanisme comportant :
- un dispositif de mesure de la pression environnante (20) comportant un élément configuré pour se déformer mécaniquement sous l'effet d'une variation de la pression environnante ;
- un premier mobile (31) relié cinématiquement au dispositif de mesure de la pression environnante (20), de manière à être entrainé en rotation sous l'effet d'une variation de pression environnante ;
- un mécanisme d'indication de la pression mesurée (40) comportant un organe indicateur de pression mesurée (44) lié cinématiquement à un rouage d'affichage de la pression mesurée (41) ;
ledit mécanisme de pièce d'horlogerie (1, 1') étant **caractérisé en ce qu'**il comporte :
- un deuxième mobile (33) configuré pour être en liaison débrayable avec le premier mobile (31), de sorte que le deuxième mobile (33) est entraîné en rotation par la rotation du premier mobile (31) sous l'effet d'une variation de pression, lorsque le deuxième mobile (33) est embrayé avec le premier mobile (31); ledit deuxième mobile (33) étant lié cinématiquement au rouage d'affichage de la pression mesurée (41) du mécanisme d'indication de la pression mesurée (40) ;
- un mécanisme de remise à zéro (100) pour positionner, sur demande, ledit organe indicateur de la pression mesurée (44) dans une position de référence, ledit mécanisme de remise à zéro (100) étant configuré pour débrayer le deuxième mobile (33) du premier mobile (31) et pour modifier la position relative du deuxième mobile (33) par rapport au premier mobile (31), de manière à positionner ledit organe indicateur de la pression mesurée (44) dans ladite position de référence.

2. Mécanisme de pièce d'horlogerie (1, 1') indiquant une information relative à la pression environnante selon la revendication 1, **caractérisé en ce que** ledit deuxième mobile (33) est monté en friction avec ledit premier mobile (31), de sorte qu'un couple de friction existe entre le premier mobile (31) et le deuxième mobile (33).

3. Mécanisme de pièce d'horlogerie (1, 1') indiquant une information relative à la pression environnante selon l'une des revendications précédentes, **caractérisé en ce que** ledit mécanisme de remise à zéro (100) comporte :
- un mécanisme de blocage (120) configuré pour venir bloquer la position angulaire du premier mobile (31), et
- un mécanisme d'entrainement (130) configuré pour appliquer sur ledit deuxième mobile (33) un couple d'entrainement et pour modifier la position relative entre le premier mobile (31) et le deuxième mobile (33), de manière à positionner ledit organe indicateur de la pression mesurée (44) dans ladite position de référence, lorsque le couple d'entrainement est supérieur au couple de friction existant entre le premier mobile (31) et le deuxième mobile (33).

4. Mécanisme de pièce d'horlogerie (1, 1') indiquant une information relative à la pression environnante selon la revendication précédente, **caractérisé en ce que** ledit mécanisme de remise à zéro (100) comporte une commande de remise à zéro (50), actionnable par l'utilisateur, mobile en rotation autour d'un pivot (11), la commande de remise à zéro (50) étant configurée pour actionner le mécanisme de blocage (120) lors d'une première phase angulaire puis le mécanisme d'entrainement (130) lors d'une deuxième phase angulaire.

5. Mécanisme de pièce d'horlogerie (1, 1') indiquant une information relative à la pression environnante selon la revendication précédente, **caractérisé en ce que** ledit mécanisme de blocage (120) comporte :
- une bascule de remise à zéro (60) coopérant avec ladite commande de remise à zéro (50) et mise en mouvement lors de la sollicitation de la commande de remise à zéro (50) ;
- un bloqueur (70) mis en mouvement par ladite bascule de remise à zéro (60), ledit bloqueur (70) étant mobile entre une position de repos, dans laquelle la rotation du premier mobile (31) n'est pas bloquée, et une position de blocage dans laquelle la rotation du premier mobile (31) est bloquée.

6. Mécanisme de pièce d'horlogerie (1, 1') indiquant une information relative à la pression environnante selon la revendication précédente, **caractérisé en ce que** le bloqueur (70) comporte un bec de blocage (71) adapté pour s'introduire entre deux dents consécutives d'une denture d'un rouage de blocage (80) engrené avec le premier mobile (31) et pour verrouiller la position angulaire dudit rouage de blocage (80).

7. Mécanisme de pièce d'horlogerie (1, 1') indiquant une information relative à la pression environnante selon la revendication précédente, **caractérisé en ce que** ledit bec de blocage (71) du bloqueur (70) et la denture du rouage de blocage (80) présentent un profil garantissant le verrouillage dudit rouage de blocage (80) lorsqu'un effort tangentiel est appliqué sur le rouage de blocage (80).

8. Mécanisme de pièce d'horlogerie (1, 1') indiquant une information relative à la pression environnante selon l'une des revendications 5 à 7, **caractérisé en ce que** la bascule de remise à zéro (60) comporte un bec de bascule (63), le bec de bascule (63) étant configuré pour basculer ledit bloqueur (70) dans sa position de blocage lors de la première phase angulaire de la commande de remise à zéro (50) et pour maintenir le bloqueur (70) en position de blocage lors d'une deuxième phase angulaire de la remise à zéro (50).

9. Mécanisme de pièce d'horlogerie (1, 1') indiquant une information relative à la pression environnante selon l'une des revendications 5 à 8, **caractérisé en ce que** le bloqueur (70) comporte un organe de rappel (73) configuré pour repositionner le bloqueur (70) dans sa position de repos.

10. Mécanisme de pièce d'horlogerie (1, 1') indiquant une information relative à la pression environnante selon l'une des revendications 3 à 9, **caractérisé en ce que** le mécanisme d'entrainement (130) comporte :
- un coeur de remise à zéro (132) présentant une position d'équilibre (136), ladite position d'équilibre correspondant à la position de référence de l'organe indicateur de la pression mesurée (44),
- un marteau (131) de remise à zéro configuré pour repositionner ledit coeur de remise à zéro (132) dans sa position d'équilibre (136).

11. Mécanisme de pièce d'horlogerie (1, 1') indiquant une information relative à la pression environnante selon la revendication précédente, **caractérisé en ce que** le mécanisme d'entrainement (130) comporte un mobile d'entrainement (133) lié cinématiquement au mécanisme d'indication de la pression mesurée (40) et **en ce que** le coeur de remise à zéro (132) est solidaire du mobile d'entrainement (133), de sorte que le positionnement du coeur de remise à zéro (132) dans sa position d'équilibre (136) par l'action du marteau (131) modifie la position relative du deuxième mobile (33) par rapport au premier mobile (31), de manière à positionner ledit organe indicateur de la pression mesurée (44) dans ladite position de référence.

12. Mécanisme de pièce d'horlogerie (1, 1') indiquant une information relative à la pression environnante selon la revendication 4 et selon l'une des revendications 10 à 11, **caractérisé en ce que** le marteau (131) est solidaire de la commande de remise à zéro (50).

13. Mécanisme de pièce d'horlogerie (1, 1') indiquant une variation de pression environnante selon l'une des revendications précédentes, **caractérisé en ce que** ledit mécanisme de remise à zéro (100) comporte un organe de retenue (56) configuré pour exercer un effort de retenue sur ladite commande de remise à zéro (50) et pour se déformer élastiquement lorsqu'un effort supérieur à l'effort de retenue est appliqué sur ledit organe de retenue (56).

14. Mécanisme de pièce d'horlogerie (1, 1') indiquant une variation de pression environnante selon l'une des revendications précédentes, **caractérisé en ce que** ledit organe de retenue (56) comporte une portion élastique (58) configurée pour se déformer élastiquement par flambage.

15. Mécanisme de pièce d'horlogerie (1, 1') indiquant une variation de pression environnante selon l'une des revendications 13 à 14, **caractérisé en ce que** l'organe de retenue (56) coopère directement avec ladite bascule de remise à zéro (60).

16. Mécanisme de pièce d'horlogerie (1') indiquant une information relative à la pression environnante selon l'une des revendications précédentes, **caractérisé en ce qu'**il comporte un mécanisme d'indication de la pression maximale (220) comportant un rouage d'affichage de la pression maximale (224) comportant une roue d'affichage de la pression maximale (221), ledit mécanisme d'indication de la pression maximale (220) comportant un organe indicateur de la pression maximale (223) solidaire de la roue d'affichage de la pression maximale (221) ; ledit mécanisme d'entrainement (130) configuré pour entrainer graduellement le rouage d'affichage de la pression maximale (224) lors d'une augmentation de la pression environnante.

17. Mécanisme de pièce d'horlogerie (1') indiquant une information relative à la pression environnante selon la revendication précédente, **caractérisé en ce que** le mécanisme d'entrainement (130) comporte :
- un mobile d'entrainement (133), solidaire d'un axe (135), engrené avec le rouage d'affichage de la pression mesurée (41) ;
- un mobile suiveur (232) monté libre autour de l'axe (135) du mobile d'entrainement (133), le mobile suiveur (232) étant engrené avec le rouage d'affichage de la pression maximale (224) ; le mobile d'entrainement (133) étant configuré pour entrainer le mobile suiveur (232) lors d'une augmentation de la pression environnante.

18. Mécanisme de pièce d'horlogerie (1') indiquant une information relative à la pression environnante selon la revendication précédente, **caractérisé en ce que** le mécanisme d'entrainement (130) comporte une goupille d'entrainement (234) solidaire du mobile d'entrainement (133) et coopérant avec une lumière (235) ménagée dans le mobile suiveur (232).

19. Mécanisme de pièce d'horlogerie (1') indiquant une information relative à la pression environnante selon l'une des revendications 16 à 18, **caractérisé en ce que** ledit mécanisme de pièce d'horlogerie (1') comporte un mécanisme d'indexage (240) pour indexer la position du rouage d'affichage de la pression maximale (224) à chaque avance, le mécanisme d'indexage (240) comportant un organe de blocage (241) coopérant avec un mobile d'indexage (243).

20. Mécanisme de pièce d'horlogerie (1') indiquant une information relative à la pression environnante selon la revendication précédente, **caractérisé en ce que** le mobile d'indexage (243) est lié cinématiquement à la roue d'affichage de la pression maximale (221) par un train d'engrenage T1, T2 et **en ce que** le rapport d'engrenage du train d'engrenage T1, T2 entre la roue d'affichage de la pression maximale (221) et le mobile d'indexage (243) est un rapport de multiplication.

21. Mécanisme de pièce d'horlogerie (1') indiquant une information relative à la pression environnante selon l'une des revendications 19 à 20, **caractérisé en ce que** le mobile d'indexage (243) comporte une roue dentée d'indexage (244) comportant une denture asymétrique (248), de préférence une denture en dents de loup, ledit organe de blocage (241) coopérant avec la denture asymétrique (248) de la roue dentée d'indexage (244).

22. Mécanisme de pièce d'horlogerie (1') indiquant une information relative à la pression environnante selon l'une des revendications 19 à 21, **caractérisé en ce que** ledit organe de blocage (241) est un organe de blocage débrayable configuré pour être débrayé par le mécanisme de remise à zéro (100).

23. Mécanisme de pièce d'horlogerie (1') indiquant une information relative à la pression environnante selon la revendication 4 et la revendication précédente, **caractérisé en ce que** ledit organe de blocage (241) est configuré pour être débrayé par la commande de remise à zéro (50).

24. Mécanisme de pièce d'horlogerie (1') indiquant une information relative à la pression environnante selon l'une des revendications 22 à 23, **caractérisé en ce que** le mécanisme d'indexage (240) comporte un organe de rappel (249) configuré pour assurer un repositionnement du rouage d'affichage de la pression maximale (224) sous l'effet d'un élément de rappel (247) lorsque l'organe de blocage (241) est débrayé.

25. Profondimètre comportant un mécanisme de pièce d'horlogerie (1, 1') selon l'une des revendications 1 à 24.

26. Altimètre comportant un mécanisme de pièce d'horlogerie (1, 1') selon l'une des revendications 1 à 24.

27. Mouvement horloger comportant un mécanisme de pièce d'horlogerie (1, 1') selon l'une des revendications 1 à 24.

28. Pièce d'horlogerie, telle qu'une montre de plongée, comportant un mouvement horloger selon la revendication précédente.

## Patentansprüche

1. Uhrenmechanismus (1, 1'), der eine Information über den Umgebungsdruck anzeigt, wobei der Mechanismus umfasst:
- eine Vorrichtung zum Messen des Umgebungsdrucks (20), die ein Element umfasst, das so konfiguriert ist, dass es sich unter dem Einfluss einer Veränderung des Umgebungsdrucks mechanisch verformt;
- einen ersten Drehteil (31), der kinematisch mit der Vorrichtung zum Messen des Umgebungsdrucks (20) verbunden ist, um unter dem Einfluss einer Veränderung des Umgebungsdrucks in Drehung versetzt zu werden;
- einen Mechanismus zum Anzeigen des gemessenen Drucks (40), der ein Anzeigeorgan für den gemessenen Druck (44) umfasst, das kinematisch mit einem Räderwerk zum Anzeigen des gemessenen Drucks (41) verbunden ist;
wobei der Uhrenmechanismus (1, 1') **dadurch gekennzeichnet ist, dass** er umfasst:
- einen zweiten Drehteil (33), der so konfiguriert ist, dass er mit dem ersten Drehteil (31) in auskuppelbarer Verbindung steht, sodass der zweite Drehteil (33) durch die Drehung des ersten Drehteils (31) unter dem Einfluss einer Druckänderung in Drehung versetzt wird, wenn der zweite Drehteil (33) mit dem ersten Drehteil (31) eingekuppelt ist; wobei der zweite Drehteil (33) kinematisch mit dem Räderwerk zum Anzeigen des gemessenen Drucks (41) des Mechanismus zum Anzeigen des gemessenen Drucks (40) verbunden ist;
- einen Rückstellmechanismus (100), um auf Anforderung das Anzeigeorgan für den gemessenen Druck (44) in einer Referenzposition zu positionieren, wobei der Rückstellmechanismus (100) so konfiguriert ist, dass er den zweiten Drehteil (33) vom ersten Drehteil (31) auskuppelt und die relative Position des zweiten Drehteils (33) in Bezug auf den ersten Drehteil (31) modifiziert, um das Anzeigeorgan für den gemessenen Druck (44) in der Referenzposition zu positionieren.

2. Uhrenmechanismus (1, 1'), der eine Information über den Umgebungsdruck anzeigt, nach Anspruch 1, **dadurch gekennzeichnet, dass** der zweite Drehteil (33) in Reibung mit dem ersten Drehteil (31) montiert ist, sodass zwischen dem ersten Drehteil (31) und dem zweiten Drehteil (33) ein Reibungsmoment besteht.

3. Uhrenmechanismus (1, 1'), der eine Information über den Umgebungsdruck anzeigt, nach einem der vorstehenden Ansprüche, **dadurch gekennzeichnet, dass** der Rückstellmechanismus(100) umfasst:
- einen Blockiermechanismus (120), der so konfiguriert ist, dass er die Winkelposition des ersten Drehteils (31) blockiert, und
- einen Antriebsmechanismus (130), der so konfiguriert ist, dass er ein Antriebsmoment an den zweiten Drehteil (33) anlegt und die relative Position zwischen dem ersten Drehteil (31) und dem zweiten Drehteil (33) modifiziert, um das Anzeigeorgan für den gemessenen Druck (44) in der Referenzposition zu positionieren, wenn das Antriebsmoment größer ist als das Reibungsmoment, das zwischen dem ersten Drehteil (31) und dem zweiten Drehteil (33) besteht.

4. Uhrenmechanismus (1, 1'), der eine Information über den Umgebungsdruck anzeigt, nach dem vorstehenden Anspruch, **dadurch gekennzeichnet, dass** der Rückstellmechanismus (100) eine vom Benutzer betätigbare Rückstellsteuerung (50) umfasst, die um einen Zapfen (11) herum drehbeweglich ist, wobei die Rückstellsteuerung (50) so konfiguriert ist, dass sie bei einer ersten Winkelphase den Blockiermechanismus (120) und anschließend bei einer zweiten Winkelphase den Antriebsmechanismus (130) betätigt.

5. Uhrenmechanismus (1, 1'), der eine Information über den Umgebungsdruck anzeigt, nach dem vorstehenden Anspruch, **dadurch gekennzeichnet, dass** der Blockiermechanismus (120) umfasst:
- eine Rückstellwippe (60), die mit der Rückstellsteuerung (50) zusammenwirkt und bei der Belastung der Rückstellsteuerung (50) in Bewegung versetzt wird;
- einen Blockierhebel (70), der von der Rückstellwippe (60) in Bewegung versetzt wird, wobei der Blockierhebel (70) zwischen einer Ruheposition, in der die Drehung des ersten Drehteils (31) nicht blockiert ist, und einer Blockierposition, in der die Drehung des ersten Drehteils (31) blockiert ist, beweglich ist.

6. Uhrenmechanismus (1, 1'), der eine Information über den Umgebungsdruck anzeigt, nach dem vorstehenden Anspruch, **dadurch gekennzeichnet, dass** der Blockierhebel (70) eine Blockiermessschnabel (71) umfasst, die geeignet ist, sich zwischen zwei aufeinanderfolgende Zähne einer Zahnung eines Blockierräderwerks (80), das mit dem ersten Drehteil (31) in Eingriff steht, zu schieben und die Winkelposition des Blockierräderwerks (80) zu verriegeln.

7. Uhrenmechanismus (1, 1'), der eine Information über den Umgebungsdruck anzeigt, nach dem vorstehenden Anspruch, **dadurch gekennzeichnet, dass** der Blockiermessschnabel (71) des Blockierhebels (70) und die Zahnung des Blockierräderwerks (80) ein Profil aufweisen, das die Verriegelung des Blockierräderwerks (80) gewährleistet, wenn eine tangentiale Kraft an das Blockierräderwerk (80) angelegt wird.

8. Uhrenmechanismus (1, 1'), der eine Information über den Umgebungsdruck anzeigt, nach einem der Ansprüche 5 bis 7, **dadurch gekennzeichnet, dass** die Rückstellwippe (60) einen Wippenmessschnabel (63) umfasst, wobei der Wippenmessschnabel (63) so konfiguriert ist, dass sie den Blockierhebel (70) bei der ersten Winkelphase der Rückstellsteuerung (50) in seine Blockierposition kippt und bei einer zweiten Winkelphase der Rückstellung (50) den Blockierhebel (70) in Blockierposition hält.

9. Uhrenmechanismus (1, 1'), der eine Information über den Umgebungsdruck anzeigt, nach einem der Ansprüche 5 bis 8, **dadurch gekennzeichnet, dass** der Blockierhebel (70) ein Rückzugorgan (73) umfasst, das so konfiguriert ist, dass es den Blockierhebel (70) in seine Ruheposition zurück positioniert.

10. Uhrenmechanismus (1, 1'), der eine Information über den Umgebungsdruck anzeigt, nach einem der Ansprüche 3 bis 9, **dadurch gekennzeichnet, dass** der Antriebsmechanismus (130) umfasst:
- einen Rückstellkern (132), der eine Gleichgewichtsposition (136) aufweist, wobei die Gleichgewichtsposition der Referenzposition des Anzeigeorgans für den gemessenen Druck (44) entspricht,
- einen Rückstellhammer (131), der so konfiguriert ist, dass er den Rückstellkern (132) in seine Gleichgewichtsposition (136) zurück positioniert.

11. Uhrenmechanismus (1, 1'), der eine Information über den Umgebungsdruck anzeigt, nach dem vorstehenden Anspruch, **dadurch gekennzeichnet, dass** der Antriebsmechanismus (130) einen Antriebsdrehteil (133) umfasst, der kinematisch mit dem Mechanismus zum Anzeigen des gemessenen Drucks (40) verbunden ist, und dadurch, dass der Rückstellkern (132) fest mit dem Antriebsdrehteil (133) verbunden ist, sodass die Positionierung des Rückstellkerns (132) in seiner Gleichgewichtsposition (136) durch die Tätigkeit des Hammers (131) die relative Position des zweiten Drehteils (33) in Bezug auf den ersten Drehteil (31) modifiziert, um das Anzeigeorgan für den gemessenen Druck (44) in der Referenzposition zu positionieren.

12. Uhrenmechanismus (1, 1'), der eine Information über den Umgebungsdruck anzeigt, nach Anspruch 4 und nach einem der Ansprüche 10 bis 11, **dadurch gekennzeichnet, dass** der Hammer (131) fest mit der Rückstellsteuerung (50) verbunden ist.

13. Uhrenmechanismus (1, 1'), der eine Veränderung des Umgebungsdrucks anzeigt, nach einem der vorstehenden Ansprüche, **dadurch gekennzeichnet, dass** der Rückstellmechanismus (100) ein Halteorgan (56) umfasst, das so konfiguriert ist, dass es eine Haltekraft auf die Rückstellsteuerung (50) ausübt und sich elastisch verformt, wenn eine Kraft, die größer ist als die Haltekraft, an das Halteorgan (56) angelegt wird.

14. Uhrenmechanismus (1, 1'), der eine Veränderung des Umgebungsdrucks anzeigt, nach einem der vorstehenden Ansprüche, **dadurch gekennzeichnet, dass** das Halteorgan (56) einen elastischen Abschnitt (58) umfasst, der so konfiguriert ist, dass er sich durch Knicken elastisch verformt.

15. Uhrenmechanismus (1, 1'), der eine Veränderung des Umgebungsdrucks anzeigt, nach einem der Ansprüche 13 bis 14, **dadurch gekennzeichnet, dass** das Halteorgan (56) direkt mit der Rückstellwippe (60) zusammenwirkt.

16. Uhrenmechanismus (1'), der eine Information über den Umgebungsdruck anzeigt, nach einem der vorstehenden Ansprüche, **dadurch gekennzeichnet, dass** er einen Mechanismus zum Anzeigen des maximalen Drucks (220) umfasst, der ein Räderwerk zum Anzeigen des maximalen Drucks (224) umfasst, das ein Rad zum Anzeigen des maximalen Drucks (221) umfasst, wobei der Mechanismus zum Anzeigen des maximalen Drucks (220) ein Anzeigeorgan für den maximalen Druck (223) umfasst, das fest mit dem Rad zum Anzeigen des maximalen Drucks (221) verbunden ist; wobei der Antriebsmechanismus (130) so konfiguriert ist, dass er das Räderwerk zum Anzeigen des maximalen Drucks (224) bei einem Anstieg des Umgebungsdrucks schrittweise antreibt.

17. Uhrenmechanismus (1'), der eine Information über den Umgebungsdruck anzeigt, nach dem vorstehenden Anspruch, **dadurch gekennzeichnet, dass** der Antriebsmechanismus (130) umfasst:
- einen Antriebsdrehteil (133), der fest mit einer Achse (135) verbunden ist, die mit dem Räderwerk zum Anzeigen des gemessenen Drucks (41) in Eingriff steht;
- einen Folgerdrehteil (232), der frei um die Achse (135) des Antriebsdrehteils (133) montiert ist, wobei der Folgerdrehteil (232) mit dem Räderwerk zum Anzeigen des maximalen Drucks (224) in Eingriff steht; wobei der Antriebsdrehteil (133) so konfiguriert ist, dass er den Folgerdrehteil (232) bei einem Anstieg des Umgebungsdrucks antreibt.

18. Uhrenmechanismus (1'), der eine Information über den Umgebungsdruck anzeigt, nach dem vorstehenden Anspruch, **dadurch gekennzeichnet, dass** der Antriebsmechanismus (130) einen Antriebsstift (234) umfasst, der fest mit dem Antriebsdrehteil (133) verbunden ist und mit einer Öffnung (235) zusammenwirkt, die im Folgerdrehteil (232) ausgebildet ist.

19. Uhrenmechanismus (1'), der eine Information über den Umgebungsdruck anzeigt, nach einem der Ansprüche 16 bis 18, **dadurch gekennzeichnet, dass** der Uhrenmechanismus (1') einen Indexierungsmechanismus (240) umfasst, um die Position des Räderwerks zum Anzeigen des maximalen Drucks (224) bei jedem Vorgang zu indexieren, wobei der Indexierungsmechanismus (240) ein Blockierorgan (241) umfasst, das mit einem Indexierungsdrehteil (243) zusammenwirkt.

20. Uhrenmechanismus (1'), der eine Information über den Umgebungsdruck anzeigt, nach dem vorstehenden Anspruch, **dadurch gekennzeichnet, dass** der Indexierungsdrehteil (243) durch einen Getriebezug T1, T2 kinematisch mit dem Rad zum Anzeigen des maximalen Drucks (221) verbunden ist, und dadurch, dass das Übersetzungsverhältnis des Getriebezugs T1, T2 zwischen dem Rad zum Anzeigen des maximalen Drucks (221) und dem Indexierungsdrehteil (243) ein Multiplikationsverhältnis ist.

21. Uhrenmechanismus (1'), der eine Information über den Umgebungsdruck anzeigt, nach einem der Ansprüche 19 bis 20, **dadurch gekennzeichnet, dass** der Indexierungsdrehteil (243) ein Indexierungszahnrad (244) umfasst, das eine asymmetrische Zahnung (248), bevorzugt eine Wolfszahnverzahnung, umfasst, wobei das Blockierorgan (241) mit der asymmetrischen Zahnung (248) des Indexierungszahnrads (244) zusammenwirkt.

22. Uhrenmechanismus (1'), der eine Information über den Umgebungsdruck anzeigt, nach einem der Ansprüche 19 bis 21, **dadurch gekennzeichnet, dass** das Blockierorgan (241) ein auskuppelbares Blockierorgan ist, das so konfiguriert ist, dass es vom Rückstellmechanismus (100) ausgekuppelt wird.

23. Uhrenmechanismus (1'), der eine Information über den Umgebungsdruck anzeigt, nach Anspruch 4 und dem vorstehenden Anspruch, **dadurch gekennzeichnet, dass** das Blockierorgan (241) so konfiguriert ist, dass es von der Rückstellsteuerung (50) ausgekuppelt wird.

24. Uhrenmechanismus (1'), der eine Information über den Umgebungsdruck anzeigt, nach einem der Ansprüche 22 bis 23, **dadurch gekennzeichnet, dass** der Indexierungsmechanismus (240) ein Rückzugorgan (249) umfasst, das so konfiguriert ist, dass es eine Rückpositionierung des Räderwerks zum Anzeigen des maximalen Drucks (224) unter dem Einfluss eines Rückzugelements (247) gewährleistet, wenn das Blockierorgan (241) ausgekuppelt ist.

25. Tiefenmesser, der einen Uhrenmechanismus (1, 1') nach einem der Ansprüche 1 bis 24 umfasst.

26. Höhenmesser, der einen Uhrenmechanismus (1, 1') nach einem der Ansprüche 1 bis 24 umfasst.

27. Uhrwerk, das einen Uhrenmechanismus (1, 1') nach einem der Ansprüche 1 bis 24 umfasst.

28. Uhr, wie etwa eine Taucheruhr, die ein Uhrwerk nach dem vorstehenden Anspruch umfasst.

## Claims

1. Timepiece mechanism (1, 1') indicating information relating to the ambient pressure, said mechanism comprising:
- an ambient pressure measuring device (20) comprising an element configured to deform mechanically under the effect of a variation of the ambient pressure;
- a first wheel assembly (31) kinematically connected to the ambient pressure measuring device (20), in such a way as to be rotated under the effect of an ambient pressure variation;
- a measured pressure indicator mechanism (40) comprising a measured pressure indicator organ (44) kinematically connected to a measured pressure display train (41);
said timepiece mechanism (1, 1') being **characterised in that** it comprises:
- a second wheel assembly (33) configured to be in uncouplable connection with the first wheel assembly (31), such that the second wheel assembly (33) is rotated by the rotation of the first wheel assembly (31) under the effect of a pressure variation, when the second wheel assembly (33) is coupled with the first wheel assembly (31); said second wheel assembly (33) being kinematically connected to the measured pressure display train (41) of the measured pressure indicator mechanism (40);
- a zero-reset mechanism (100) to position, on demand, said measured pressure indicator organ (44) in a reference position, said zero-reset mechanism (100) being configured to uncouple the second wheel assembly (33) from the first wheel assembly (31) and to modify the relative position of the second wheel assembly (33) in relation to the first wheel assembly (31), in such a way as to position said measured pressure indicator organ (44) in said reference position.

2. Timepiece mechanism (1, 1') indicating information relating to the ambient pressure according to claim 1, **characterised in that** said second wheel assembly (33) is frictionally mounted with said first wheel assembly (31), such that a friction torque exists between the first wheel assembly (31) and the second wheel assembly (33).

3. Timepiece mechanism (1, 1') indicating information relating to the ambient pressure according to one of the preceding claims, **characterised in that** said zero-reset mechanism (100) comprises:
- a blocking mechanism (120) configured to come to block the angular position of the first wheel assembly (31), and
- a drive mechanism (130) configured to apply on said second wheel assembly (33) a drive torque and to modify the relative position between the first wheel assembly (31) and the second wheel assembly (33), in such a way as to position said measured pressure indicator organ (44) in said reference position, when the drive torque is greater than the friction torque existing between the first wheel assembly (31) and the second wheel assembly (33).

4. Timepiece mechanism (1, 1') indicating information relating to the ambient pressure according to the preceding claim, **characterised in that** said zero-reset mechanism (100) comprises a zero-reset lever organ command (50), that can be actuated by the user, rotatable about a pivot (11), the zero-reset lever organ command (50) being configured to actuate the blocking mechanism (120) during a first angular phase then the drive mechanism (130) during a second angular phase.

5. Timepiece mechanism (1, 1') indicating information relating to the ambient pressure according to the preceding claim, **characterised in that** said blocking mechanism (120) comprises:
- a zero-reset lever (60) cooperating with said zero-reset lever organ command (50) and set in motion during the effect of the zero-reset lever organ command (50);
- a blocking lever (70) set in motion by said zero-reset lever (60), said blocking lever (70) being movable between a rest position, wherein the rotation of the first wheel assembly (31) is not blocked, and a blocking position wherein the rotation of the first wheel assembly (31) is blocked.

6. Timepiece mechanism (1, 1') indicating information relating to the ambient pressure according to the preceding claim, **characterised in that** the blocking lever (70) comprises a blocking beak (71) adapted to be inserted between two consecutive teeth of a toothing of a blocking train (80) meshed with the first wheel assembly (31) and to lock the angular position of said blocking train (80).

7. Timepiece mechanism (1, 1') indicating information relating to the ambient pressure according to the preceding claim, **characterised in that** said blocking beak (71) of the blocking lever (70) and the toothing of the blocking train (80) have a profile guaranteeing the locking of said blocking train (80) when a tangential force is applied on the blocking train (80).

8. Timepiece mechanism (1, 1') indicating information relating to the ambient pressure according to one of claims 5 to 7, **characterised in that** the zero-reset lever (60) comprises a lever beak (63), the lever beak (63) being configured to tip said blocking lever (70) in its blocking position during the first angular phase of the zero-reset lever organ command (50) and to hold the blocking lever (70) in blocking position during a second angular phase of the zero-reset (50).

9. Timepiece mechanism (1, 1') indicating information relating to the ambient pressure according to one of claims 5 to 8, **characterised in that** the blocking lever (70) comprises a return organ (73) configured to reposition the blocking lever (70) in its rest position.

10. Timepiece mechanism (1, 1') indicating information relating to the ambient pressure according to one of claims 3 to 9, **characterised in that** the drive mechanism (130) comprises:
- a zero-reset heart-piece (132) having a balance position (136), said balance position corresponding to the reference position of the measured pressure indicator organ (44),
- a zero-reset hammer (131) configured to reposition said zero-reset heart-piece (132) in its balance position (136).

11. Timepiece mechanism (1, 1') indicating information relating to the ambient pressure according to the preceding claim, **characterised in that** the drive mechanism (130) comprises a drive wheel assembly (133) kinematically connected to the measured pressure indicator mechanism (40) and **in that** the zero-reset heart-piece (132) is integral with the drive wheel assembly (133), such that the positioning of the zero-reset heart-piece (132) in its balance position (136) through the action of the hammer (131) modifies the relative position of the second wheel assembly (33) in relation to the first wheel assembly (31), in such a way as to position said measured pressure indicator organ (44) in said reference position.

12. Timepiece mechanism (1, 1') indicating information relating to the ambient pressure according to claim 4 and according to one of claims 10 to 11, **characterised in that** the hammer (131) is integral with the zero-reset lever organ command (50).

13. Timepiece mechanism (1, 1') indicating an ambient pressure variation according to one of the preceding claims, **characterised in that** said zero-reset mechanism (100) comprises a retention organ (56) configured to exert a retention force on said zero-reset lever organ command (50) and to elastically deform when a force greater than the retention force is applied on said retention organ (56).

14. Timepiece mechanism (1, 1') indicating an ambient pressure variation according to one of the preceding claims, **characterised in that** said retention organ (56) comprises an elastic portion (58) configured to elastically deform by buckling.

15. Timepiece mechanism (1, 1') indicating an ambient pressure variation according to one of claims 13 to 14, **characterised in that** the retention organ (56) cooperates directly with said zero-reset lever (60).

16. Timepiece mechanism (1') indicating information relating to the ambient pressure according to one of the preceding claims, **characterised in that** it comprises a maximum pressure indication mechanism (220) comprising a maximum pressure display train (224) comprising a maximum pressure display wheel (221), said maximum pressure indication mechanism (220) comprising a maximum pressure indicator organ (223) integral with the maximum pressure display wheel (221); said drive mechanism (130) configured to gradually drive the maximum pressure display train (224) during an increase of the ambient pressure.

17. Timepiece mechanism (1') indicating information relating to the ambient pressure according to the preceding claim, **characterised in that** the drive mechanism (130) comprises:
- a drive wheel assembly (133), integral with an arbor (135), meshed with the measured pressure display train (41);
- a follower wheel assembly (232) freely mounted about the arbor (135) of the drive wheel assembly (133), the follower wheel assembly (232) being meshed with the maximum pressure display train (224); the drive wheel assembly (133) being configured to drive the follower wheel assembly (232) during an increase of the ambient pressure.

18. Timepiece mechanism (1') indicating information relating to the ambient pressure according to the preceding claim, **characterised in that** the drive mechanism (130) comprises a drive pin (234) integral with the drive wheel assembly (133) and cooperating with an opening (235) arranged in the follower wheel assembly (232).

19. Timepiece mechanism (1') indicating information relating to the ambient pressure according to one of claims 16 to 18, **characterised in that** said timepiece mechanism (1') comprises an indexing mechanism (240) to index the position of the maximum pressure display train (224) at each advance, the indexing mechanism (240) comprising a blocking organ (241) cooperating with an indexing wheel assembly (243).

20. Timepiece mechanism (1') indicating information relating to the ambient pressure according to the preceding claim, **characterised in that** the indexing wheel assembly (243) is kinematically connected to the maximum pressure display wheel (221) by a gear train T1, T2 and **in that** the gear ratio of the gear train T1, T2 between the maximum pressure display wheel (221) and the indexing wheel assembly (243) is a multiplication ratio.

21. Timepiece mechanism (1') indicating information relating to the ambient pressure according to one of claims 19 to 20, **characterised in that** the indexing wheel assembly (243) comprises an indexing toothed wheel (244) comprising an asymmetric toothing (248), preferably a wolf-tooth toothing, said blocking organ (241) cooperating with the asymmetric toothing (248) of the indexing toothed wheel (244).

22. Timepiece mechanism (1') indicating information relating to the ambient pressure according to one of claims 19 to 21, **characterised in that** said blocking organ (241) is an uncouplable blocking organ configured to be uncoupled by the zero-reset mechanism (100).

23. Timepiece mechanism (1') indicating information relating to the ambient pressure according to claim 4 and the preceding claim, **characterised in that** said blocking organ (241) is configured to be uncoupled by the zero-reset lever organ command (50).

24. Timepiece mechanism (1') indicating information relating to the ambient pressure according to one of claims 22 to 23, **characterised in that** the indexing mechanism (240) comprises a return organ (249) configured to ensure a repositioning of the maximum pressure display train (224) under the effect of a return element (247) when the blocking organ (241) is uncoupled.

25. Depth gauge comprising a timepiece mechanism (1, 1') according to one of claims 1 to 24.

26. Altimeter comprising a timepiece mechanism (1, 1') according to one of claims 1 to 24.

27. Horological movement comprising a timepiece mechanism (1, 1') according to one of claims 1 to 24.

28. Timepiece, such as a diving watch, comprising a horological movement according to the preceding claim.
